# EUROPEAN PATENT APPLICATION

(11) **EP 4 769 877 A1**
(43) Date of publication of application: **01.07.2026**
(21) Application number: 24916057.3
(22) Date of filing: 11.01.2024
(51) Int. Cl.: H02J 7/00

(54) **BATTERY MANAGEMENT METHOD AND RELATED DEVICE THEREOF**

(71) Applicant: Honor Device Co., Ltd., Shenzhen, Guangdong 518040 (CN)
(72) Inventor: YAO, Yifan, Shenzhen, Guangdong 518040 (CN); LI, Kai, Shenzhen, Guangdong 518040 (CN)
(74) Representative: Isarpatent
(86) International application number: PCT/CN2024/071900
(87) International publication number: WO 2025/147984

(57) **Abstract**

This application provides a battery management method and a related device, and relates to the field of terminal technologies. The method includes the following steps: a power-on level is received, with charging and discharging channels of a first battery cell and a second battery cell being disabled; a first battery management chip controls the first battery cell to discharge, and a second battery management chip controls the second battery cell not to discharge, in response to the power-on level; a second battery management chip controls the second battery cell to discharge when a voltage difference between the first battery cell and the second battery cell is less than or equal to a power-on voltage difference threshold; and an electronic device is controlled to power on when both the first battery cell and the second battery cell are discharged. According to this application, batteries are separately managed, and discharging paths of the batteries are sequentially enabled to improve reliability and safety of using a plurality of batteries connected in parallel.

## Description

### TECHNICAL FIELD

This application relates to the field of terminal processing, and specifically, to a battery management method and a related device.

### BACKGROUND

Currently, in an electronic device, a plurality of batteries may be connected in parallel. After the electronic device is powered off, discharge tubes of the batteries still remain in an on state. To reduce power consumption, an existing solution provided in the industry is to add a switch circuit. After the electronic device is powered off, discharging channels of the batteries are disabled by using a switch, so that the batteries are in an ultra-low power mode.

However, after discharge tubes of the batteries are turned off, there is a problem of voltage imbalance among the batteries. If a voltage difference is relatively large, a high short-circuit current is generated and a component is burned out when the batteries are turned on again.

Therefore, how to manage the batteries to avoid short-circuit burnout when the batteries are turned on becomes a pressing issue to be addressed.

### SUMMARY

This application provides a battery management method and a related device. Batteries are separately managed, and discharging paths of the batteries are sequentially enabled when a voltage difference is relatively large to improve reliability and safety of using a plurality of batteries connected in parallel.

According to a first aspect, a battery management method is provided, where the method is applied to an electronic device, the electronic device includes a battery pack, the battery pack includes a first battery branch and a second battery branch that are connected in parallel, the first battery branch includes a first battery cell and a first battery management chip, and the second battery branch includes a second battery cell and a second battery management chip; and the method includes the following steps: a power-on level is received, with charging and discharging channels of the first battery cell and the second battery cell being disabled; the first battery management chip controls the first battery cell to discharge, and the second battery management chip controls the second battery cell not to discharge, in response to the power-on level; the second battery management chip controls the second battery cell to discharge when a voltage difference between the first battery cell and the second battery cell is less than or equal to a power-on voltage difference threshold; and the electronic device is controlled to power on when both the first battery cell and the second battery cell are discharged.

It should be understood that a power-on level is actually a level signal, and the power-on level received here is actually a power-on level signal received.

In this embodiment of this application, to avoid the problems of a high short-circuit current and component burnout when the discharging channels of the two battery cells are enabled at the same time, in this application, the discharging channel of one battery cell may be first enabled, and the discharging channel of the other battery cell is enabled after a voltage difference between the two battery cells satisfies a normal range, so that the voltage difference between the two battery cells may be controlled by controlling the discharging channels of the two battery cells to be sequentially enabled. Therefore, the foregoing technical problems may be avoided, thereby improving reliability and safety of using a plurality of batteries connected in parallel, and ensuring that the electronic device can be normally powered on.

Compared with the conventional technology, in this application, a switch circuit is removed, and the discharging channels are directly disabled and sequentially enabled in the battery management chips.

With reference to the first aspect, in some implementations of the first aspect, before that a power-on level is received, the method further includes the following steps: a battery parameter detection service is run, where the battery parameter detection service is used to detect at least a current of each of the battery cells; and when it is determined, based on a detection result of the battery parameter detection service, that an ultra-low power mode can be entered, the charging and discharging channels of the plurality of battery cells are controlled to be disabled after preset duration.

In this embodiment of this application, the battery management chips run the battery parameter detection service, so that it may be determined that the ultra-low power mode can be entered, and the charging and discharging channels of the battery cells are disabled when it is determined that the ultra-low power mode can be entered. Therefore, a software method may be used to autonomously enter the ultra-low power mode after power-off. Compared with the conventional technology, another device is not needed to trigger, and the method is simple and has low power consumption.

With reference to the first aspect, in some implementations of the first aspect, before that a power-on level is received, the method further includes the following steps: the battery parameter detection service is disabled when it is determined that the ultra-low power mode can be entered; and an activation detection function is enabled, where the activation detection function is used to detect the power-on level.

In this embodiment of this application, after the ultra-low power mode is entered, it is also possible to determine, by means of activation detection, whether the power-on level is received. When the power-on level is received, the electronic device is triggered to exit the ultra-low power mode, and when the power-on level is not received, the electronic device enters a cyclic power-down state in the ultra-low power mode.

With reference to the first aspect, in some implementations of the first aspect, after that an activation detection function is enabled, the method further includes the following steps: an operating voltage provided by the battery cells is periodically collected if the power-on level is not received; the power-on level is continuously detected when it is determined that the operating voltage is greater than or equal to an operating voltage threshold; and the electronic device is powered down to end operation when it is determined that the operating voltage is less than the operating voltage threshold.

In this embodiment of this application, an activation detection method is simple and easy to implement. In addition, after the cyclic power-down state in the ultra-low power mode is entered, based on comparison between a collected voltage and the operating voltage, the battery management chips may be powered down when the voltage is insufficient to further reduce some power consumption.

With reference to the first aspect, in some implementations of the first aspect, the power-on level is triggered by a button operation or by USB charging.

The button operation is used to indicate a pressing operation on a power button, and the USB charging trigger is used to indicate that a USB connector is plugged in a USB interface for charging.

With reference to the first aspect, in some implementations of the first aspect, the method further includes the following steps: the first battery management chip controls the first battery cell to discharge, and the second battery management chip controls the second battery cell not to discharge when the voltage difference between the first battery cell and the second battery cell is greater than the power-on voltage difference threshold, and a voltage of the first battery cell is higher than a voltage of the second battery cell.

The power-on voltage difference threshold may be a preset threshold, and the power-on voltage difference threshold may be determined based on an actual operating condition of the electronic device. For example, the power-on voltage difference threshold may be a maximum voltage difference threshold capable satisfying normal operation of the electronic device.

In this embodiment of this application, when the voltage difference between the two battery cells is relatively large, and the voltage of the first battery cell is higher than the voltage of the second battery cell, although the voltage difference is relatively large, the discharging channel of the first battery cell is first enabled. Therefore, it is only necessary for the first battery cell to continue discharging and the second battery cell to continue not discharging. Therefore, the voltage difference between the two battery cells may be reduced by lowering the voltage of the battery cell with high power.

With reference to the first aspect, in some implementations of the first aspect, the method further includes the following step.

The second battery management chip controls the second battery cell to charge if the power-on level is triggered by USB charging when the voltage difference between the first battery cell and the second battery cell is greater than the power-on voltage difference threshold, and a voltage of the first battery cell is higher than a voltage of the second battery cell.

In this embodiment of this application, when the voltage difference between the two battery cells is relatively large, and the voltage of the first battery cell is higher than the voltage of the second battery cell, although the voltage difference is relatively large, the discharging channel of the first battery cell is first enabled, and USB charging is available. Therefore, the battery cell with low power may be charged by using a USB, and the voltage difference between the two battery cells is reduced by increasing the voltage of the battery cell with low power.

With reference to the first aspect, in some implementations of the first aspect, the method further includes the following step.

The first battery management chip controls the first battery cell to charge if the power-on level is triggered by USB charging when the voltage difference between the first battery cell and the second battery cell is greater than the power-on voltage difference threshold, and the voltage of the first battery cell is lower than the voltage of the second battery cell.

In this embodiment of this application, when the voltage difference between the two battery cells is relatively large, and the voltage of the first battery cell is lower than the voltage of the second battery cell, the voltage difference is relatively large, and the discharging channel of the first battery cell with low power is first enabled. Therefore, when USB charging is available, the first battery cell with low power may be charged by using a USB, and the voltage difference between the two battery cells is reduced by increasing the voltage of the battery cell with low power.

With reference to the first aspect, in some implementations of the first aspect, that the first battery management chip controls the first battery cell to discharge, and the second battery management chip controls the second battery cell not to discharge, in response to the power-on level includes the following steps: the first battery management chip detects the voltage of the first battery cell; and the first battery management chip controls the first battery cell to discharge, and the second battery management chip controls the second battery cell not to discharge, when it is determined that the voltage of the first battery cell satisfies a power-on voltage condition.

The power-on voltage condition may be a preset threshold, and the power-on voltage condition may be determined based on an actual operating condition of the electronic device. For example, the power-on voltage condition may be a minimum voltage capable of satisfying normal operation of the electronic device.

In this embodiment of this application, when battery management is performed, a voltage magnitude of the first battery cell is first confirmed. When the voltage of the first battery cell satisfies the power-on voltage condition, it indicates that the first battery cell has a voltage that can support power-on. Therefore, the first battery cell may be discharged. Because one battery cell is first enabled for discharging, the problems of a high short-circuit current and component burnout when the battery cells are enabled at the same time may be avoided.

With reference to the first aspect, in some implementations of the first aspect, after that the first battery management chip detects the voltage of the first battery cell, the method further includes the following steps: the first battery management chip controls the first battery cell not to discharge when it is determined that the voltage of the first battery cell does not satisfy the power-on voltage condition; and the first battery management chip controls the first battery cell to charge until the power-on voltage condition is satisfied if the power-on level is triggered by USB charging.

In this embodiment of this application, when battery management is performed, a voltage magnitude of the first battery cell is first confirmed. When the voltage of the first battery cell does not satisfy the power-on voltage condition, it indicates that the first battery cell has an extremely low voltage that cannot support power-on. Therefore, the first battery cell with low power cannot be discharged, and the first battery cell needs to be charged by using a USB charging function when USB charging is available, so that the first battery cell is first charged to satisfy the power-on voltage condition to prepare for subsequent power-on.

With reference to the first aspect, in some implementations of the first aspect, when it is determined that the voltage difference between the first battery cell and the second battery cell is greater than the power-on voltage difference threshold, and the voltage of the first battery cell satisfies the power-on voltage condition, the method further includes the following steps: the second battery management chip detects the voltage of the second battery cell; and the first battery management chip controls the first battery cell to discharge, and the second battery management chip controls the second battery cell not to discharge, when it is determined that the voltage of the second battery cell satisfies the power-on voltage condition, and the voltage of the first battery cell is higher than the voltage of the second battery cell; or the second battery management chip controls the second battery cell to charge if the power-on level is triggered by USB charging when it is determined that the voltage of the second battery cell satisfies the power-on voltage condition, and the voltage of the first battery cell is lower than the voltage of the second battery cell.

In this embodiment of this application, before power-on, a voltage of the second battery cell may be further detected to determine whether the voltage of the second battery cell satisfies a power-on voltage condition. When the voltage of the second battery cell satisfies the power-on voltage condition, it indicates that the second battery cell has a voltage that can support power-on.

The power-on voltage condition corresponding to the first battery cell and the power-on voltage condition corresponding to the second battery cell may be set as required. The power-on voltage conditions may be the same or different. This is not limited in this embodiment of this application.

With reference to the first aspect, in some implementations of the first aspect, when it is determined that the voltage difference between the first battery cell and the second battery cell is greater than the power-on voltage difference threshold, and the voltage of the first battery cell satisfies the power-on voltage condition, the method further includes the following step: the second battery management chip controls the second battery cell to charge if the power-on level is triggered by USB charging when it is determined that the voltage of the second battery cell does not satisfy the power-on voltage condition.

In this embodiment of this application, when the voltage difference is relatively large, the voltage of the first battery cell satisfies the power-on voltage condition, and the voltage of the second battery cell does not satisfy the power-on voltage condition, it indicates that the second battery cell has an extremely low voltage that cannot support power-on. Therefore, when USB charging is available, the second battery cell with low power may be first charged, so that the second battery cell is first charged to satisfy the power-on voltage condition to prepare for subsequent power-on.

With reference to the first aspect, in some implementations of the first aspect, the method further includes the following steps: the first battery management chip controls the first battery cell to switch from a discharge state to a non-discharge state, and the second battery management chip controls the second battery cell to switch from a non-discharge state to a discharge state, when the voltage difference between the first battery cell and the second battery cell is greater than the power-on voltage difference threshold, and a voltage of the first battery cell is lower than a voltage of the second battery cell.

In this embodiment of this application, when the voltage difference between the two battery cells is greater than the power-on voltage difference threshold, and the battery cell with the lower voltage is first enabled, the discharging channel of the battery cell with low power may be disabled, and the discharging channel of the other battery cell with high power may be enabled to reduce the voltage difference between the two battery cells. This is equivalent to switching states of the discharging channels of the two battery cells. This manner is easy to implement, and is also relatively simple and flexible to implement.

With reference to the first aspect, in some implementations of the first aspect, before that the first battery management chip controls the first battery cell to discharge, and the second battery management chip controls the second battery cell not to discharge, the method includes the following steps: the first battery management chip detects a voltage of the first battery cell; the second battery management chip detects a voltage of the second battery cell; and the voltage of the first battery cell is determined to be higher than the voltage of the second battery cell.

In this embodiment of this application, before the first battery cell is controlled, voltages of the two battery cells may be first detected to determine that the first battery cell is a battery cell with a relatively high voltage. Therefore, this is equivalent to directly selecting the battery cell with high power first to discharge by comparing the voltages, regardless of whether the voltage difference between the two battery cells is large or small, so as to reduce the voltage difference between the two battery cells. In this manner, a battery cell to be discharged is initially selected, and subsequent switching is not required, so that stability is relatively good.

With reference to the first aspect, in some implementations of the first aspect, the first battery cell is a main battery of the electronic device, and the second battery cell is a secondary battery of the electronic device.

With reference to the first aspect, in some implementations of the first aspect, the method further includes the following steps: there is no response if the power-on level is triggered by the button operation; and a display of the electronic device displays a charging reminder.

With reference to the first aspect, in some implementations of the first aspect, the battery management chip includes a GPIO pin or an interrupt pin, where both the GPIO pin and the interrupt pin are configured to receive the power-on level.

According to a second aspect, an electronic device is provided, where the battery pack includes a first battery branch and a second battery branch that are connected in parallel, the first battery branch includes a first battery cell and a first battery management chip, the second battery branch includes a second battery cell and a second battery management chip, the electronic device includes one or more processors, and the processor invokes computer instructions to enable the electronic device to perform the following steps: a power-on level is received, with charging and discharging channels of the first battery cell and the second battery cell being disabled; the first battery management chip controls the first battery cell to discharge, and the second battery management chip controls the second battery cell not to discharge, in response to the power-on level; the second battery management chip controls the second battery cell to discharge when a voltage difference between the first battery cell and the second battery cell is less than or equal to a power-on voltage difference threshold; and the electronic device is controlled to power on when both the first battery cell and the second battery cell are discharged.

According to a third aspect, an electronic device is provided, including a module/unit configured to perform the battery management method according to the first aspect or any one of the implementations of the first aspect.

According to a fourth aspect, a chip system is provided, where the chip system is applied to an electronic device, the chip system includes one or more processors, and the processor is configured to invoke computer instructions to enable the electronic device to perform any aspect or any battery management method according to any aspect.

According to a fifth aspect, a computer-readable storage medium is provided. The computer-readable storage medium stores computer program code. When the computer program code is run by an electronic device, the electronic device is enabled to perform the battery management method according to any aspect or any one of the implementations of any aspect.

According to a sixth aspect, a computer program product is provided. The computer program product includes computer program code. When the computer program code is run by an electronic device, the electronic device is enabled to perform the battery management method according to any aspect or any one of the implementations of any aspect.

### BRIEF DESCRIPTION OF DRAWINGS

FIG. 1 is a hardware system of an electronic device according to an embodiment of this application;
FIG. 2 is a schematic diagram of a distribution structure of an electronic device according to an embodiment of this application;
FIG. 3 is a schematic diagram of a distribution structure of another electronic device according to an embodiment of this application;
FIG. 4 is a schematic diagram of a distribution structure of still another electronic device according to an embodiment of this application;
FIG. 5 is a schematic flowchart of a battery management method according to an embodiment of this application;
FIG. 6 is a schematic flowchart of another battery management method according to an embodiment of this application;
FIG. 7A and FIG. 7B are a schematic flowchart of still another battery management method according to an embodiment of this application;
FIG. 8A and FIG. 8B are a schematic flowchart of still another battery management method according to an embodiment of this application;
FIG. 9A and FIG. 9B are a schematic flowchart of still another battery management method according to an embodiment of this application;
FIG. 10 is a schematic diagram of module interaction of a battery management method according to an embodiment of this application;
FIG. 11A and FIG. 11B are a schematic diagram of module interaction of another battery management method according to an embodiment of this application;
FIG. 12A, FIG. 12B, and FIG. 12C are a schematic diagram of module interaction of still another battery management method according to an embodiment of this application;
FIG. 13A, FIG. 13B, and FIG. 13C are a schematic diagram of module interaction of still another battery management method according to an embodiment of this application;
FIG. 14 is a schematic diagram of a distribution structure of still another electronic device according to an embodiment of this application;
FIG. 15 is a schematic flowchart of still another battery management method according to an embodiment of this application;
FIG. 16 is a schematic diagram of a prompt interface according to an embodiment of this application; and
FIG. 17 is a schematic diagram of a structure of an electronic device applicable to this application.

### DESCRIPTION OF EMBODIMENTS

In the embodiments of this application, the following terms "first", "second", and the like are merely used for description, and shall not be understood as an indication or implication of relative importance or an implicit indication of a quantity of indicated technical features. Therefore, a feature limited by "first" or "second" may explicitly or implicitly include one or more features. In the descriptions of the embodiments, unless otherwise stated, "a plurality of" means two or more.

In the embodiments of this application, an electronic device 100 may be a mobile phone (which may include a flat screen, a foldable screen, or the like), a smart screen, a tablet computer, a wearable electronic device, an in-vehicle electronic device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a projector, or the like. A specific type of the electronic device 100 is not limited in this embodiment of this application.

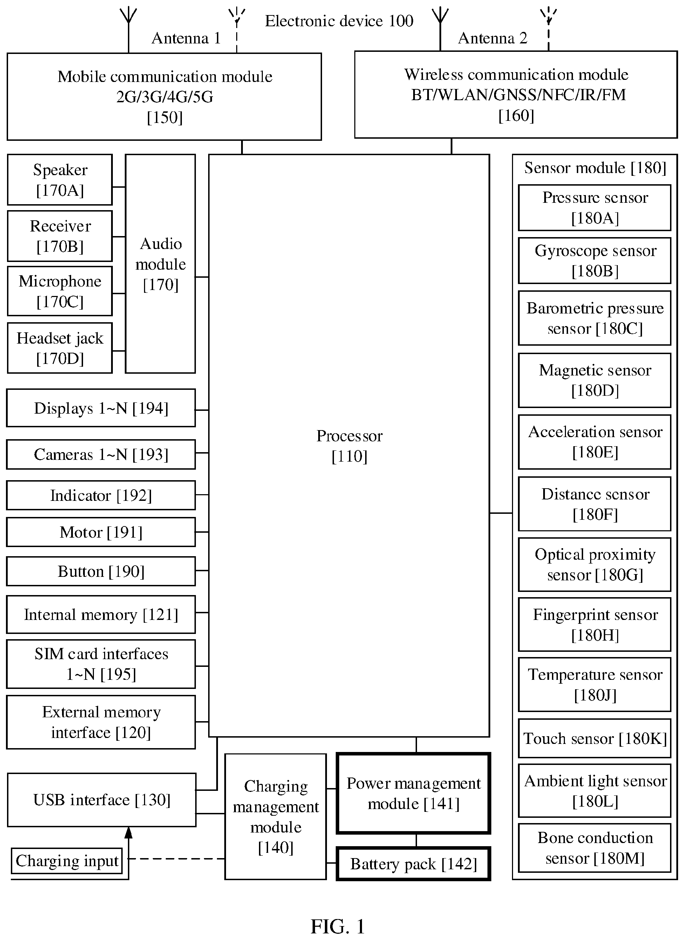

FIG. 1 shows a hardware system of an electronic device 100 applicable to this application.

The electronic device 100 may include a processor 110, an external memory interface 120, an internal memory 121, a universal serial bus (universal serial bus, USB) interface 130, a charging management module 140, a power management module 141, a battery pack 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It should be noted that the structure shown in FIG. 1 does not constitute a specific limitation on the electronic device 100. In some other embodiments of this application, the electronic device 100 may include more or fewer components than the components shown in FIG. 1, or the electronic device 100 may include a combination of some components in the components shown in FIG. 1, or the electronic device 100 may include subcomponents of some components in the components shown in FIG. 1. The components shown in FIG. 1 may be implemented by hardware, software, or a combination of software and hardware.

For example, the processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent devices, or may be an integrated device. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, and a USB interface.

For example, in this embodiment of this application, the processor 110 may be configured to perform a battery management method provided in this embodiment of this application. For example, a power-on level is received, with charging and discharging channels of a first battery cell and a second battery cell being disabled; a first battery management chip controls the first battery cell to discharge, and a second battery management chip controls the second battery cell not to discharge, in response to the power-on level; a second battery management chip controls the second battery cell to discharge when a voltage difference between the first battery cell and the second battery cell is less than or equal to a power-on voltage difference threshold; and the electronic device is controlled to power on when both the first battery cell and the second battery cell are discharged.

A connection relationship between the modules shown in FIG. 1 is an example for description and does not constitute a limitation on the connection relationship between the modules of the electronic device 100. Optionally, the modules of the electronic device 100 may alternatively use a combination of a plurality of connection manners in the foregoing embodiments.

For example, the charging management module 140 is configured to receive electric power from a charger. The charger may be a wireless charger, or may be a wired charger. In some embodiments of wired charging, the charging management module 140 may receive a current of the wired charger by using the USB interface 130. In some embodiments of wireless charging, the charging management module 140 may receive an electromagnetic wave (a current path is shown in a dotted line) by using a wireless charging coil of the electronic device 100. When charging the battery pack 142, the charging management module 140 may further supply power to the electronic device 100 by using the power management module 141.

The power management module 141 is configured to connect to the battery pack 142, the charging management module 140, and the processor 110. The power management module 141 receives an input from the battery pack 142 and/or an input from the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (for example, leakage or impedance). Optionally, the power management module 141 may be disposed in the processor 110, or the power management module 141 and the charging management module 140 may be disposed in a same device.

A wireless communication function of the electronic device 100 may be implemented by using components such as the antenna 1, the antenna 2, the mobile communication module 150, the wireless communication module 160, the modem processor, and the baseband processor.

The antenna 1 and the antenna 2 are configured to transmit and receive electromagnetic wave signals. Each antenna in the electronic device 100 may be configured to cover one or more communication bands. Different antennas may be further multiplexed to improve antenna utilization. For example, the antenna 1 may be multiplexed as a diversity antenna of a wireless local area network. In some other embodiments, the antenna may be used in combination with a tuning switch.

The electronic device 100 may implement a display function by using the GPU, the display 194, and the application processor. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

The display 194 may be configured to display an image or a video.

Optionally, the display 194 may be configured to display an image or a video. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini light-emitting diode (mini light-emitting diode, Mini LED), a micro light-emitting diode (micro light-emitting diode, Micro LED), a micro OLED (Micro OLED), or a quantum dot light emitting diode (quantum dot light emitting diodes, QLED). In some embodiments, the electronic device 100 may include one or N displays 194, where N is a positive integer greater than 1.

For example, the electronic device 100 may implement a photographing function by using the ISP, the camera 193, the video codec, the GPU, the display 194, the application processor, and the like.

For example, the ISP is configured to process data fed back by the camera 193. For example, during photographing, a shutter is enabled. Light is transferred to a photosensitive element of the camera through a camera, and an optical signal is converted into an electrical signal. The photosensitive element of the camera transfers the electrical signal to the ISP for processing, and therefore, the electrical signal is converted into an image visible to a naked eye. The ISP may perform algorithm optimization on noise, brightness, and a color of an image, and the ISP may further optimize parameters such as exposure and a color temperature of a photographing scene. In some embodiments, the ISP may be disposed in the camera 193.

For example, the camera 193 (also referred to as a lens) is configured to capture a still image or a video, and may be enabled through triggering by using an application instruction, to implement a photographing function, for example, obtaining an image of any scene through photographing. The camera may include parts such as an imaging lens, a light filter, and an image sensor. Light emitted or reflected by an object enters the imaging lens, passes through the light filter, and finally converges on the image sensor. The imaging lens is mainly configured to converge and image light emitted or reflected by all objects (which may also be referred to as a to-be-shot scene or a target scene, or may be understood as a scene image expected to be shot by a user) in an angle of view for photographing. The light filter is mainly configured to filter out excess light waves (for example, light waves other than visible light, such as infrared) in light. The image sensor may be a charge coupled device (charge coupled device, CCD) or a complementary metal-oxide-semiconductor (complementary metal-oxide-semiconductor, CMOS) phototransistor. The image sensor is mainly configured to perform photoelectric conversion on a received optical signal to convert the received optical signal into an electrical signal, and then transmit the electrical signal to the ISP to convert the electrical signal into a digital image signal. The ISP outputs the digital image signal to the DSP for processing. The DSP converts the digital image signal into an image signal in a standard format, for example, RGB or YUV.

For example, the digital signal processor is configured to process a digital signal, and can process another digital signal in addition to the digital image signal. For example, when the electronic device 100 selects a frequency, the digital signal processor is configured to perform Fourier transform and the like on frequency energy.

For example, the video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The hardware system of the electronic device 100 is described in detail above.

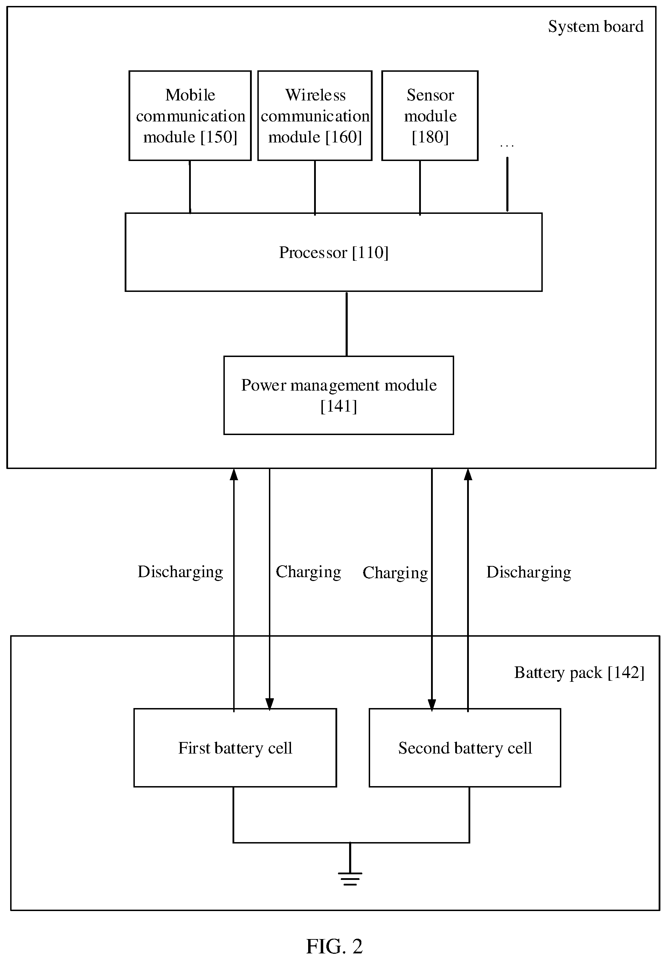

The following descriptions use a foldable screen phone as an example of the electronic device 100. FIG. 2 to FIG. 4 are schematic diagram of distribution structures of three electronic devices 100 according to embodiments of this application.

As shown in FIG. 2, a processor 110, a power management module 141, and other modules in the electronic device 100 except a battery pack 142 may be integrated onto a system board, and the battery pack 142 is independently disposed. The power management module 141 is connected to the battery pack 142 to receive an input from the battery pack 142, or in other words, the power management module 141 is configured to collect a voltage/current.

The battery pack 142 usually includes a plurality of battery branches that are connected in parallel. For example, dual battery branches connected in parallel are used as an example, and each battery branch may include one battery cell. A battery cell in a first battery branch may be referred to as a first battery cell, and a battery cell in a second battery branch may be referred to as a second battery cell. After the electronic device is powered off, discharge tubes of the first battery cell and the second battery cell still remain in an on state.

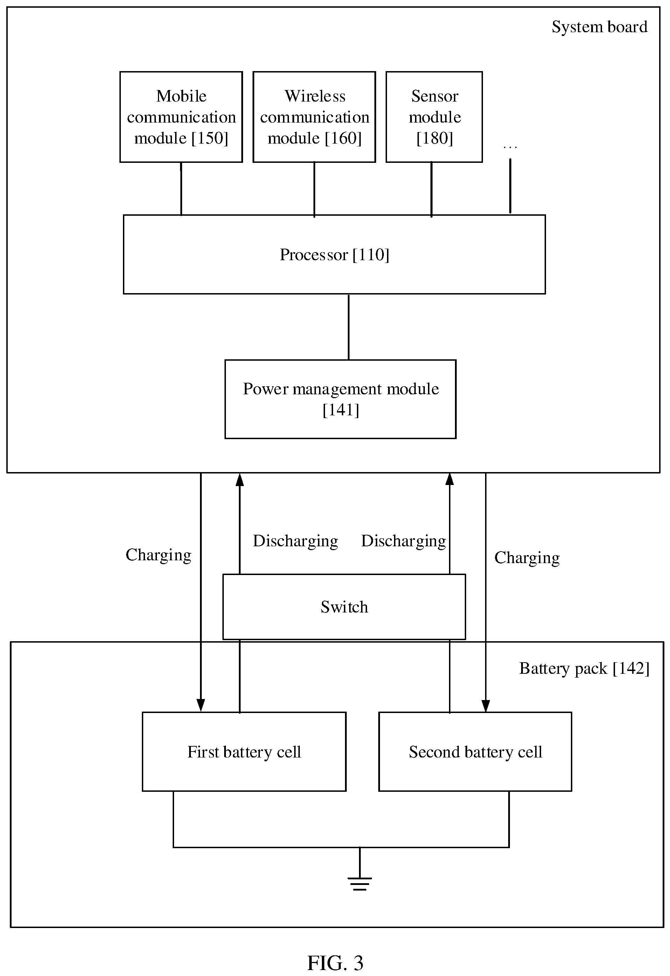

To reduce power consumption, an existing solution provided in the industry is to add a switch at an entrance of the system board or an exit of the battery pack 142. As shown in FIG. 3, at an exit of a battery pack 142, a switch is added between a battery cell and a power management module 141 located on a system board to enable or disable a discharging channel of the battery cell.

In addition, to measure a battery level, an existing battery pack 142 further needs to include a battery meter chip. To protect batteries, the existing battery pack 142 may further include a battery protection chip. The battery meter chip and the battery protection chip are not shown in FIG. 3.

For example, a mobile phone may remain in a packaging box for a long time after leaving the factory and before being sold. To reduce power consumption, before the mobile phone leaves the factory, an engineer may connect the mobile phone to another device to trigger the mobile phone to power off and enter an ultra-low power mode.

For example, as shown in FIG. 3, a switch is added between a first battery cell and the power management module 141, and between a second battery cell and the power management module 141 located on the system board, and the switch is configured to control a discharging channel of the first battery cell and a discharging channel of the second battery cell to be enabled or disabled. After the electronic device is powered off, the switch may control the discharging channels of the first battery cell and the second battery cell to be disabled.

It may be learned from comparison between FIG. 2 and FIG. 3 that, for the battery pack 142 in which a hardware switch is not added as shown in FIG. 2, a parallel circuit formed by the first battery cell and the second battery cell still exists after the electronic device is powered off, and a current between the first battery cell and the second battery cell may be automatically balanced. Therefore, there is no voltage difference between the first battery branch and the second battery branch even if time is very long.

However, for the battery pack 142 in which a hardware switch is added as shown in FIG. 3, after the electronic device is powered off, and after the switch disables the discharging channels of the first battery cell and the second battery cell, the first battery cell and the second battery cell are effectively connected only at one end (a ground terminal), and the other end is completely disconnected. Therefore, a parallel circuit no longer exists. After an ultra-low power mode is entered, the first battery cell and the second battery cell are independently consumed, and a current between the two battery cells cannot be automatically balanced. Therefore, after a long period of imbalance, a relatively large voltage difference exists between the first battery cell and the second battery cell.

When the voltage difference between the first battery cell and the second battery cell is relatively large, if the electronic device is powered on and the discharging channels of the two batteries are enabled at the same time, a high short-circuit current is generated, and a component is burned out.

Therefore, how to manage the battery cells to avoid that a high short-circuit current is generated and a component is burned out when the discharging channels are enabled at the same time becomes a pressing issue that needs to be addressed.

In view of this, an embodiment of this application provides a battery management method in which a hardware switch is removed, and battery cells are directly managed independently by using software. For example, after preset duration following power-off, an ultra-low power mode is entered, and charging and discharging channels of battery cells are disabled. When a power-on level is detected in the ultra-low power mode, the discharging channels of the battery cells are controlled to be sequentially enabled. When the power-on level is detected in the ultra-low power mode, in an exception in which voltages of the battery cells are at low levels, the discharging channels of the battery cells are controlled to be sequentially enabled after charging. When the power-on level is detected in the ultra-low power mode, and a voltage difference between the battery cells is relatively large, the battery cell with a relatively low voltage is charged, or the battery cell with a relatively high voltage is discharged, and then the discharging channels of the battery cells are controlled to be sequentially enabled. By using the method provided in this embodiment of this application, it is possible to avoid the problems of a high short-circuit current and component burnout due to a relatively large voltage difference when discharge tubes of a plurality of battery cells connected in parallel are turned on during power-on.

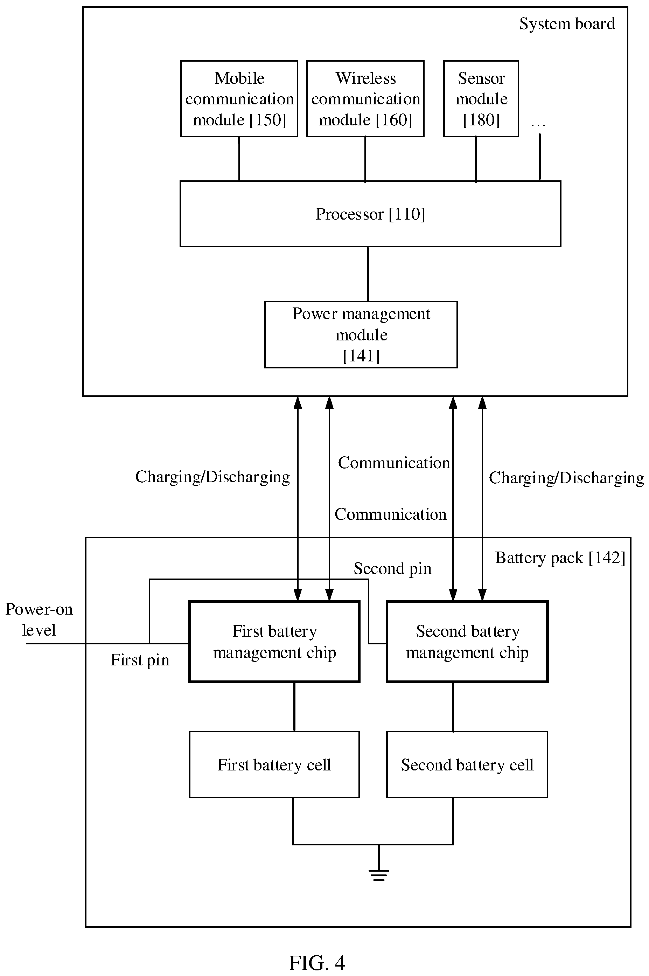

To reduce hardware costs, an embodiment of this application provides a schematic diagram of a structure of another electronic device. FIG. 4 is a schematic diagram of a structure of an electronic device according to an embodiment of this application.

As shown in FIG. 4, at an exit of a battery pack 142, battery management chips are added between battery cells and a power management module 141 located on a system board, and the battery management chips and the battery cells are integrated into the battery pack 142.

In this embodiment of this application, the battery management chips are configured to detect a parameter of the battery cells, where the parameter of the battery cells may include a voltage, a current, a battery level, or the like. The battery management chips are further configured to control enabling and disabling of charging and discharging channels of the battery cells, enabling and disabling of a communication channel, and entry and exit into/from an ultra-low power mode. In addition, the battery management chips further integrate a battery protection function, an anti-counterfeiting function, and the like. Compared with a plurality of devices with independent functions (for example, a hardware switch, a battery meter chip, and a battery protection chip) included in an existing electronic device, the battery management chips provided in this application integrate more functions, and thus have a high integration, less occupied space, and lower costs.

Certainly, the battery management chips provided in this embodiment of this application may further integrate another function, which may be specifically set as required. This is not limited in this embodiment of this application.

It should be further noted that the battery management chips may further disable the discharging channels in multiple cases, for example, when an exception of the battery cells is monitored. After the electronic device is powered off, the battery management chips disable the discharging channels of the first battery cell and the second battery cell, and an ultra-low power mode is entered, which is one of the cases in which the battery management chips disable the discharging channels.

For example, a mobile phone may remain in a packaging box for a long time after leaving the factory and before being sold. To reduce power consumption, after preset duration, the mobile phone may be controlled by software to autonomously enter an ultra-low power mode, and another device is not needed for triggering the mobile phone.

For example, as shown in FIG. 4, in the battery pack 142 provided in this embodiment of this application, a first battery management chip is added between the first battery cell and the power management module to manage the first battery cell; and a second battery management chip is added between the second battery cell and the power management module to manage the second battery cell. When the electronic device is powered off, if the charging and discharging channels of the first battery cell and the second battery cell are disabled, the electronic device enters the ultra-low power mode; and if the charging and discharging channels of the first battery cell and the second battery cell are enabled, the electronic device exits the ultra-low power mode.

In addition, the first battery management chip may further manage a communication channel between the first battery cell and the power management module, and the second battery management chip may further manage a communication channel between the second battery cell and the power management module, so as to support a power management chip on a system side to read battery data of the first battery cell and the second battery cell by means of IIC communication.

Based on the structure shown in FIG. 4, although the ultra-low power mode may be entered and exited by using software after the electronic device is powered off, without the need for external triggering, and hardware costs are reduced, the circuit still has the problems of a high short-circuit current and component burnout if the discharging channels of the two battery cells are enabled at the same time when a voltage difference between the first battery cell and the second battery cell is relatively large.

To resolve the foregoing safety problems, an embodiment of this application provides a battery management method. The method may be applied to an electronic device 100 having the structure shown in FIG. 4. The battery management method provided in this embodiment of this application is described in detail below with reference to the accompanying drawings.

Herein, the battery management method may also be understood as a multi-battery cell (also referred to as a battery or a cell) management method. A battery cell is usually understood to be a battery.

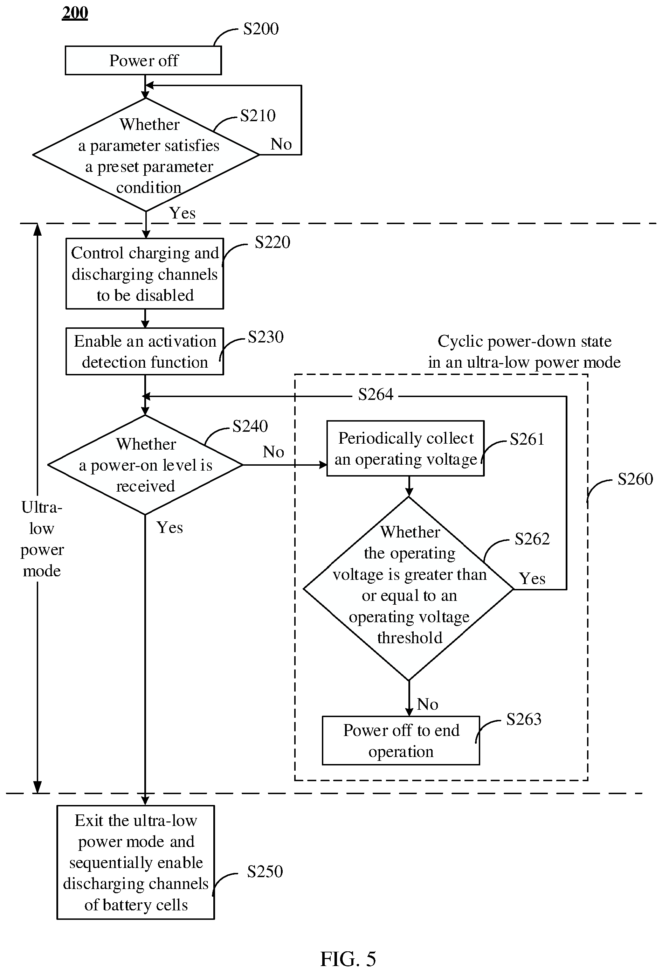

FIG. 5 is a schematic flowchart of a battery management method according to an embodiment of this application. As shown in FIG. 5, the method 200 may include the following S200 to S260. Power-off solutions related to S200 to S260 are separately described in detail below. The power-off solutions may be applied to the electronic device 100 shown in FIG. 4.

S200: An electronic device is powered off in response to a power-off operation.

For example, the power-off operation may indicate a user's pressing operation on a power button. For example, when the power button is pressed for more than two seconds, the electronic device is triggered to power off.

S210: A battery management chip determines whether a parameter of a battery cell satisfies a preset parameter threshold; and if yes, an ultra-low power mode is entered, and S220 is performed; or if no, the ultra-low power mode is not entered, and S210 is repeatedly performed.

The ultra-low power mode may also be referred to as a ship mode (ship mode).

Optionally, in response to the power-off operation, the battery management chip runs a battery parameter detection service to determine a current magnitude corresponding to a current battery, and then identifies, based on the current magnitude, whether the electronic device is powered off. If it is identified that the electronic device is powered off, the battery management chip determines that the ultra-low power mode can be entered, and S220 is performed. If it is identified that the electronic device is not powered off, the battery management chip determines that the ultra-low power mode cannot be entered. Subsequently, S210 may be performed for multiple times, and the battery management chip redetermines whether the ultra-low power mode can be entered.

For example, that the battery management chip identifies, based on the current magnitude, whether the electronic device is powered off may include the following steps: The battery management chip compares a detected current with a preset current threshold. If the detected current is less than or equal to the preset current threshold, it may be determined that a current parameter satisfies a preset parameter condition, and the electronic device is powered off and can enter the ultra-low power mode; or if the detected current is greater than the preset current threshold, it may be determined that a current parameter does not satisfy a preset parameter condition, and the electronic device cannot enter the ultra-low power mode.

The foregoing is only an example. Certainly, the battery parameter detection service may also be used to detect another parameter of a battery, and set a corresponding preset parameter condition. Then, the battery management chip may determine, based on whether the another parameter satisfies the preset parameter condition, whether the ultra-low power mode can be entered. This is not limited in this embodiment of this application.

S220: When it is determined that the parameter satisfies a preset parameter condition, that is, when it is determined that the ultra-low power mode can be entered, the battery management chip disables charging and discharging channels of the corresponding battery cell.

Optionally, when it is determined that the ultra-low power mode can be entered, the battery management chip may disable the charging and discharging channels of the battery cell after preset duration.

It should be understood that if the electronic device is powered off for a short period of time before entering the ultra-low power mode, the user may only temporarily power off the electronic device, and the electronic device may be restarted soon after power-off. Therefore, to avoid temporary power-off, a time period needs to be preset as a transition, and after preset duration, the electronic device enters the ultra-low power mode when the user is less likely to reuse the electronic device.

Optionally, when it is determined that the ultra-low power mode can be entered, the battery management chip may trigger a timing function to start timing from zero, and disable the charging and discharging channels of the corresponding battery cell after preset duration.

For FIG. 4, the first battery management chip may be configured to disable the charging and discharging channels of the first battery cell after preset duration, and the second battery management chip may be configured to disable the charging and discharging channels of the second battery cell after preset duration. It should be understood that, to minimize power consumption, charging channels and discharging channels of all battery cells need to be disabled.

Optionally, when it is determined that the ultra-low power mode can be entered, the battery management chip stops the battery parameter detection service.

S230: The battery management chip enables an activation detection function.

The activation detection function is used to indicate the battery management chip to detect a power-on level.

Optionally, S220 may be performed first, and then S230 may be performed. Alternatively, the two steps may be performed in a reverse order. Alternatively, S220 and S230 may be performed at the same time. This is not limited in this embodiment of this application.

S240: The battery management chip determines whether a power-on level is received. When the power-on level is received, S250 may be performed; or when the power-on level is not received, S260 may be performed.

S250: When the power-on level is received, the ultra-low power mode is exited, and battery management chips sequentially enable discharging channels of battery cells.

For example, in a circuit structure shown in FIG. 4, a first pin of the first battery management chip and a second pin of the second battery management chip are configured to receive a power-on level. When the first pin and the second pin receive the power-on level, the first battery management chip is configured to trigger to exit the ultra-low power mode, and enable the discharging channel of the first battery cell; and the second battery management chip is configured to trigger to exit the ultra-low power mode, and enable the discharging channel of the second battery cell, with an enabling sequence staggered.

Optionally, in response to a pressing operation on a power button, or in response to plugging a USB connector in a USB interface for USB charging by using a power supply, the battery management chip may detect a power-on level.

It should be understood that when the power-on level is received, it indicates that the user may press the power button, or use the USB interface for charging. In this case, the user may need to use the electronic device. Therefore, to improve user experience and provide service quickly when the user needs to use the electronic device, a step in which the ultra-low power mode is exited first when the battery management chip receives the power-on level may be set.

Optionally, in a possible implementation, the first pin and the second pin may be GPIO pins.

After the battery management chip enables the activation detection function, the battery management chip may periodically query whether there is a level change at the GPIO pins. It should be noted that when both the first pin and the second pin are GPIO pins, chip costs of the battery management chip are relatively low.

Optionally, in another possible implementation, the first pin and the second pin may be interrupt pins.

When a level changes, a chip interrupt may be triggered. The battery management chip is configured to receive an interrupt signal without active query. It should be noted that when both the first pin and the second pin are interrupt pins, the battery management chip may receive an interrupt signal in real time, and quickly determine that a level changes.

S260: When the power-on level is not received, a cyclic power-down state in the ultra-low power mode is entered.

It should be understood that after the electronic device is powered off, the electronic device remains in the ultra-low power mode when no power-on level is received. In the ultra-low power mode, for example, the battery cells still provide voltages for the battery management chips to support operation of the battery management chips. In this embodiment of this application, to prevent abnormal power-down of the battery management chip from resulting in another exception (for example, illogical software operation, which leads to an unknown or uncontrollable software status), the battery management chip needs to detect an operating voltage provided by the battery cell to the battery management chip, and when it is detected that the operating voltage is insufficient, the battery management chip is triggered to power down to completely turn off the battery management chip.

Optionally, S260 may include the following S261 to S264.

S261: The battery management chip periodically collects the operating voltage provided by the battery cell.

Interval duration for the battery management chip to periodically collect the operating voltage may be set as required. This is not limited in this embodiment of this application. It should be understood that when the interval duration is relatively long, that is, when a cycle for periodically collecting the operating voltage is relatively long, impact on power consumption is extremely low, and may be ignored.

Optionally, the battery management chip may collect, by using an internally integrated ADC module, the operating voltage provided by the battery cell for the battery management chip.

S262: Determine whether the collected operating voltage is greater than or equal to an operating voltage threshold.

It should be understood that the operating voltage is used to indicate a voltage magnitude provided by the battery cell for the battery management chip, and the operating voltage threshold is used to indicate a voltage magnitude required for normal operation of the battery management chip.

The operating voltage threshold is determined based on the battery management chip, and operating voltage thresholds of different battery management chips may be different. This is not limited in this embodiment of this application.

S263: Power down to end operation when it is determined that the operating voltage is less than the operating voltage threshold.

It should be noted that when the USB connector is plugged in the USB interface of the electronic device for USB charging, the battery management chip that is powered down may resume operation.

S264: Return to perform S240 when it is determined that the operating voltage is greater than or equal to the operating voltage threshold.

It should be understood that when it is determined that a collected voltage does not satisfy the operating voltage, for example, when the collected voltage is less than the operating voltage threshold, it indicates that the battery management chip cannot support operation in the ultra-low power mode. Therefore, the battery management chip may be powered down to completely end operation of the battery management chip. When the collected voltage is greater than or equal to the operating voltage threshold, it indicates that the operating voltage can still satisfy a requirement for continued operation. Therefore, the ultra-low power mode may be maintained, and S240 is performed again to continue to determine whether the power-on level is received. A subsequent process follows the same pattern, and details are not described herein again.

In addition, when a voltage is not periodically collected, it is also possible to return to perform S240.

It should be understood that when a voltage is not periodically collected, it indicates that the battery management chip may have just received the power-on level. Therefore, S240 needs to be performed again to redetermine whether the power-on level is received. A subsequent process follows the same pattern.

In this embodiment of this application, the battery management chips run the battery parameter detection service, so that it may be determined that the ultra-low power mode can be entered, and the charging and discharging channels of the battery cells are disabled when it is determined that the ultra-low power mode can be entered. Therefore, a software method may be used to autonomously enter the ultra-low power mode after power-off. Compared with the conventional technology, another device is not needed to trigger, and the method is simple and has low power consumption.

In this embodiment of this application, after the ultra-low power mode is entered, it is also possible to determine, by means of activation detection, whether the power-on level is received. When the power-on level is received, the electronic device is triggered to exit the ultra-low power mode, and when the power-on level is not received, the electronic device enters a cyclic power-down state in the ultra-low power mode. An activation detection method is simple and easy to implement. In addition, after the cyclic power-down state in the ultra-low power mode is entered, based on comparison between a collected voltage and the operating voltage, the battery management chips may be powered down when the voltage is insufficient to further reduce some power consumption.

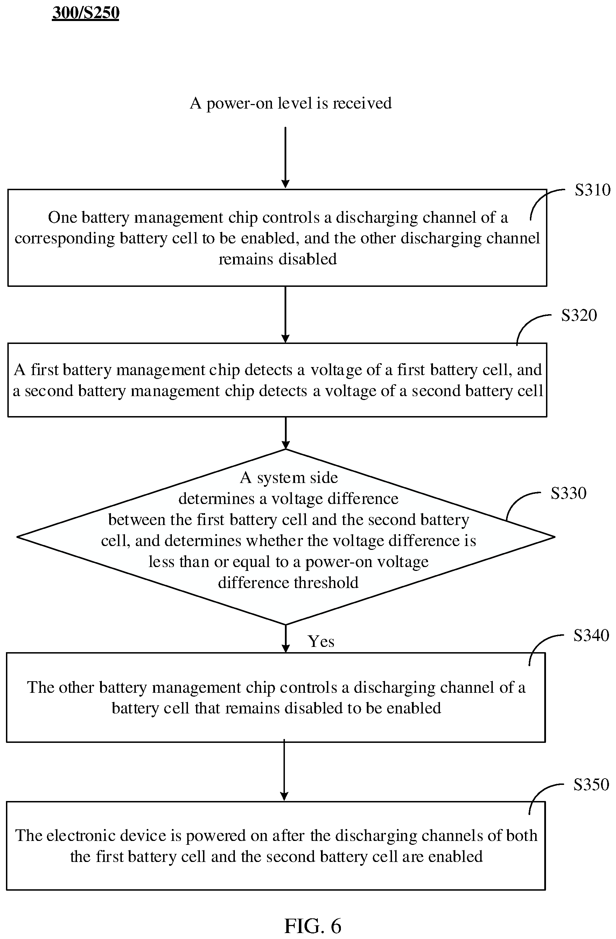

FIG. 6 is a schematic flowchart of another battery management method according to an embodiment of this application. As shown in FIG. 6, the method 300 may include the following S310 to S350. Normal power-on solutions related to S310 to S350 are separately described in detail below. The method may be applied to the electronic device 100 shown in FIG. 4.

It should be understood that the method 300 may be performed after step S240 shown in FIG. 5, that is, after it is determined that the power-on level is received. In other words, the method 300 is equivalent to a specific process of step S250.

S310: After the power-on level is received, one of the battery management chips controls a discharging channel of a corresponding battery cell to be enabled.

For example, after the power-on level is received, the first battery management chip may control the discharging channel of the first battery cell to be first enabled. When the discharging channel of the first battery cell is enabled, it is equivalent to supplying power to the system side by using the first battery cell.

In this case, the second battery management chip controls the discharging channel of the second battery cell to remain in a disabled state.

Alternatively, after the power-on level is received, the second battery management chip may control the discharging channel of the second battery cell to be first enabled. The first battery management chip controls the discharging channel of the first battery cell to remain disabled.

A sequence may be set and modified as required, for example, based on a capacity, and a discharging channel of a battery cell with a higher capacity is first set to be enabled. This is not limited in this embodiment of this application.

S320: The first battery management chip detects a voltage of the first battery cell, and the second battery management chip detects a voltage of the second battery cell.

It should be understood that in S310, the discharging channel of the first battery cell or the second battery cell is enabled, and the voltage changes. Therefore, the voltage of the first battery cell and the voltage of the second battery cell need to be detected.

S330: The system side determines a voltage difference between the first battery cell and the second battery cell, and determines whether the voltage difference is less than or equal to a power-on voltage difference threshold (Vth).

Optionally, after the first battery management chip and the second battery management chip detect the voltages of the battery cells, the power management module on the system side may read the voltage of the first battery cell from the first battery management chip, and read the voltage of the second battery cell from the second battery management chip by means of IIC communication. Alternatively, the first battery management chip may send a detected voltage of the first battery cell to the power management module on the system side by means of IIC communication. Similarly, the second battery management chip may send a detected voltage of the second battery cell to the power management module on the system side by means of IIC communication.

Then, the power management module on the system side is configured to determine a voltage difference between the voltage of the first battery cell and the voltage of the second battery cell, and compare the voltage difference with a power-on voltage difference threshold. Then the power management module may send an instruction corresponding to a result to the first battery management chip and the second battery management chip. The instruction is used to instruct the first battery management chip to control the first battery cell, and instruct the second battery management chip to control the second battery cell.

It should be noted that the voltage difference may indicate a magnitude obtained by subtracting the voltage of the second battery cell from the voltage of the first battery cell, or may indicate a magnitude obtained by subtracting the voltage of the first battery cell from the voltage of the second battery cell.

The power-on voltage difference threshold may be set and modified as required. This is not limited in this embodiment of this application. For example, the power-on voltage difference threshold may be 0.2 V, that is, the system side needs to determine whether the voltage difference between the first battery cell and the second battery cell is less than or equal to 0.2 V.

S340: When the voltage difference is less than or equal to the power-on voltage difference threshold, another battery management chip controls a discharging channel of a battery cell that remains disabled to be enabled.

When the battery cell that remains disabled is the second battery cell, the second battery management chip may control the discharging channel of the second battery cell to be enabled. That the discharging channel of the second battery cell is enabled is equivalent to supplying power to the system side by using the second battery cell.

Alternatively, when the battery cell that remains disabled is the first battery cell, the first battery management chip may control the discharging channel of the first battery cell to be enabled. That the discharging channel of the first battery cell is enabled is equivalent to supplying power to the system side by using the first battery cell.

It should be understood that when the voltage difference between the first battery cell and the second battery cell is relatively small, it indicates that although the two battery cells are independently consumed, there is little difference between the two battery cells, which is relatively safe. When the discharging channel of one battery cell is already enabled, the discharging channel of the other battery cell may be enabled, which does not generate a high short-circuit current and does not burn out a component.

Optionally, a capacity of the first battery cell is higher than that of the second battery cell.

Optionally, a capacity of the first battery cell is lower than or equal to that of the second battery cell.

The first battery management chip may also be referred to as a main battery management chip, and the first battery cell is correspondingly referred to as a main battery cell. The second battery management chip may also be referred to as a secondary battery management chip, and the second battery cell is correspondingly referred to as a secondary battery cell.

S350: The electronic device is powered on after the discharging channels of both the first battery cell and the second battery cell are enabled.

In this embodiment of this application, when exiting the ultra-low power mode, to avoid the problems of a high short-circuit current and component burnout when the discharging channels of the two battery cells are enabled at the same time, in this application, the discharging channel of one battery cell may be first enabled, and the discharging channel of the other battery cell is enabled after a voltage difference between the two battery cells satisfies a normal range, so that the voltage difference between the two battery cells may be controlled by controlling the discharging channels of the two battery cells to be sequentially enabled. Therefore, the foregoing technical problems may be avoided, thereby improving reliability and safety of using a plurality of batteries connected in parallel, and ensuring that the electronic device can be normally powered on.

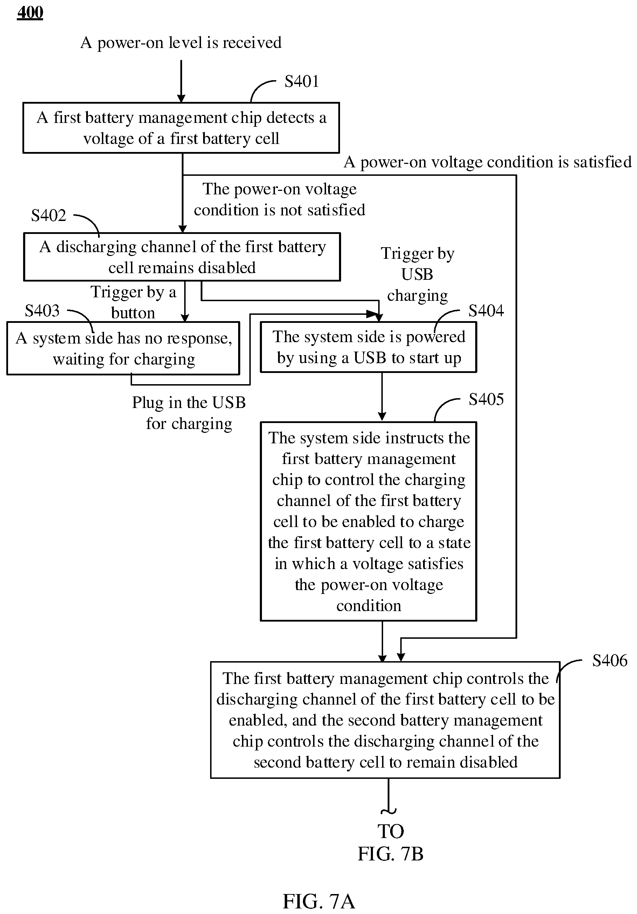

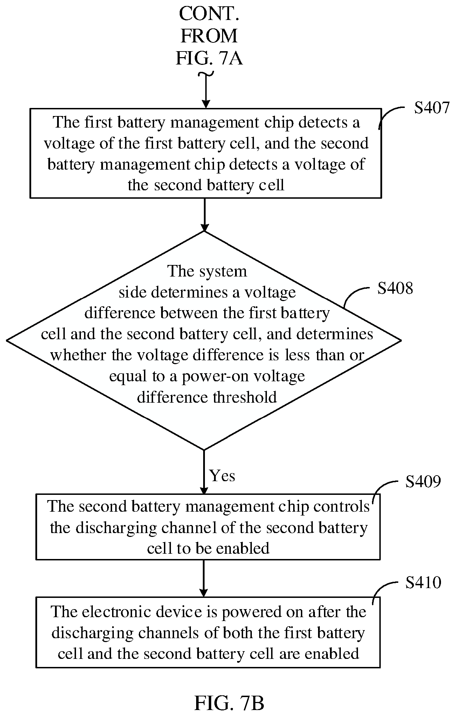

FIG. 7A and FIG. 7B are a schematic flowchart of still another battery management method according to an embodiment of this application.

As shown in FIG. 7, on the basis of FIG. 6, for example, the discharging channel of the first battery cell is controlled to be first enabled in S310, and the discharging channel of the second battery cell is controlled to be enabled later in S340. After the power-on level is received and before S310, the battery management method provided in this application may further include S401 to S405. Abnormal power-on solutions with a low battery voltage related to S401 to S405 are separately described in detail below.

S401: After the power-on level is received, the first battery management chip detects a voltage of the first battery cell.

When the voltage of the first battery cell satisfies a power-on voltage condition, subsequent S406 (equivalent to S310 in the foregoing solution in FIG. 6) is performed. When the voltage of the first battery cell does not satisfy the power-on voltage condition, subsequent S402 is performed.

For example, that the power-on voltage condition is satisfied means that a voltage is greater than or equal to a preset voltage threshold, for example, the voltage is higher than or equal to 3 V. Correspondingly, that the power-on voltage condition is not satisfied means that the voltage is less than the preset voltage threshold, that is, the voltage is lower than 3 V. The preset voltage threshold or the power-on voltage condition may be set and modified as required, and is not a fixed value. This is not limited in this embodiment of this application.

S402: When the voltage of the first battery cell does not satisfy the power-on voltage condition, S403 may be performed if the power-on level is triggered by a button; and S404 may be performed if the power-on level is triggered by USB charging.

In addition, the power-on level may carry data indicating a trigger source. For example, the power-on level may carry an identifier, 1 indicates that the trigger source is a button, and 0 indicates that the trigger source is USB charging.

The foregoing is only an example. The power-on level may further distinguish between different trigger manners by different voltage magnitudes or the like, which may be specifically set as required. This is not limited in this embodiment of this application.

S403: The system side has no response, waiting for charging.

It should be understood that in this case, the voltage of the first battery cell does not satisfy the power-on voltage condition, which is equivalent to that the first battery cell is in a low power state. If the power-on level is triggered by the button, no power is supplied, so that the system side cannot perform any processing.

After S403, if the user plugs in a charger to charge the electronic device, S404 may be performed in response to the user operation to charge the first battery cell that does not satisfy the power-on voltage condition.

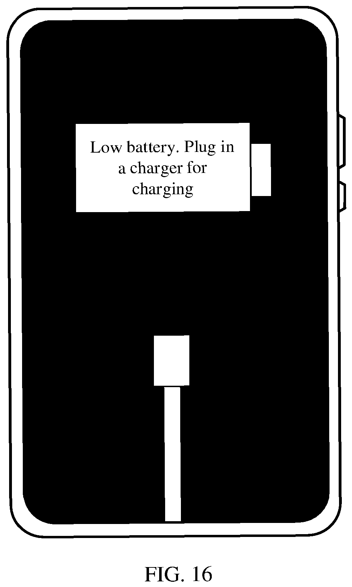

Optionally, in response to USB charging, the first battery cell may supply power to the system side, so as to support a display to display a prompt interface shown in FIG. 16.

It should be understood that the prompt interface is actually displayed when the electronic device is in a powered-off state before power-on.

S404: The system side starts up via USB power.

It should be understood that in this case, although the voltage of the first battery cell does not satisfy the power-on voltage condition, which is equivalent to that the first battery cell is in a low power state, the electronic device is connected to a USB connector for charging, and the system side may start up via USB power.

S405: The system side instructs the first battery management chip to enable the charging channel of the first battery cell to charge the first battery cell to a state in which a voltage satisfies the power-on voltage condition.

It should be understood that because the voltage of the first battery cell is in a low power state, when the power-on level is triggered by USB charging, the system side may send a command after startup to instruct the first battery management chip to enable the charging channel of the first battery cell, and charge the first battery cell to increase the voltage of the first battery cell.

S406: After S401 or S405, when the voltage of the first battery cell satisfies the power-on voltage condition, the first battery management chip may control the discharging channel of the first battery cell to be enabled, and the second battery management chip may control the discharging channel of the second battery cell to remain disabled.

S407: The first battery management chip detects a voltage of the first battery cell, and the second battery management chip detects a voltage of the second battery cell.

It should be understood that because the first battery cell is discharged, the voltage of the first battery cell changes. Therefore, the first battery management chip may be used again to detect a voltage of the first battery cell.

S408: The system side determines a voltage difference between the first battery cell and the second battery cell, and determines whether the voltage difference is less than or equal to a power-on voltage difference threshold.

S409: The second battery management chip controls the discharging channel of the second battery cell to be enabled to discharge the second battery cell.

S410: The electronic device is powered on after the discharging channels of both the first battery cell and the second battery cell are enabled.

It should be noted that, for descriptions of S406 to S407, reference may be made to the foregoing descriptions of S310 to S350 in FIG. 6. Details are not described herein again.

It should be understood that the foregoing embodiment is described by using an example in which the discharging channel of the first battery cell is controlled to be enabled. When the discharging channel of the second battery cell is controlled to be first enabled, similar to the foregoing process, reference may be made to the foregoing descriptions. Details are not described herein again.

In this embodiment of this application, in response to the power-on level being triggered, a voltage of one of the battery cells is detected before power-on. If the voltage does not satisfy the power-on voltage condition, that is, when the voltage is in a low power state, the electronic device cannot be directly powered on. In this application, it is first determined whether the power-on level is triggered by USB charging, or it is determined whether the electronic device is connected to USB charging. When USB charging is available, it indicates that power may be supplied to the battery cell. Therefore, the charging channel of the battery cell may be controlled to be enabled to charge the battery cell until the power-on voltage condition is satisfied. When the power-on voltage condition is satisfied, discharging channels of a plurality of battery cells are controlled to be sequentially enabled. According to the method provided in this embodiment of this application, when power-on safety is ensured, a low power exception during power-on may be further resolved, thereby enhancing reliability of using a plurality of batteries connected in parallel, and improving user experience.

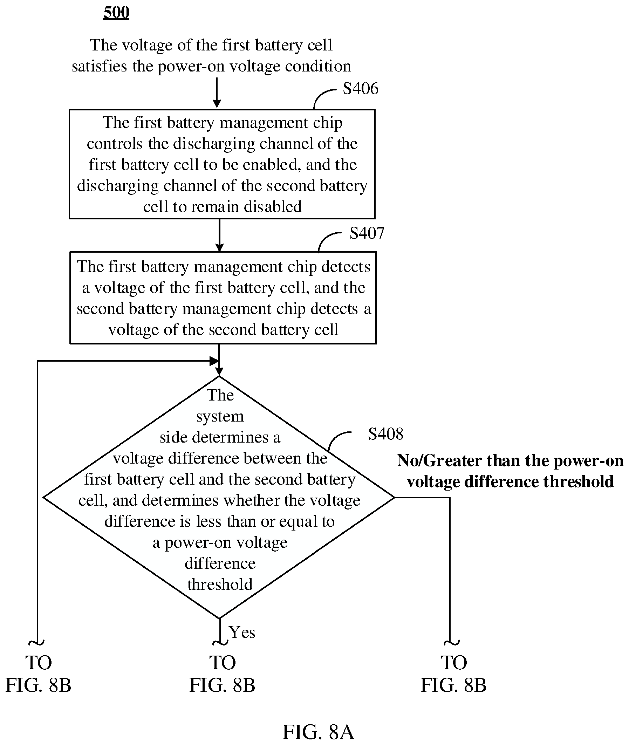

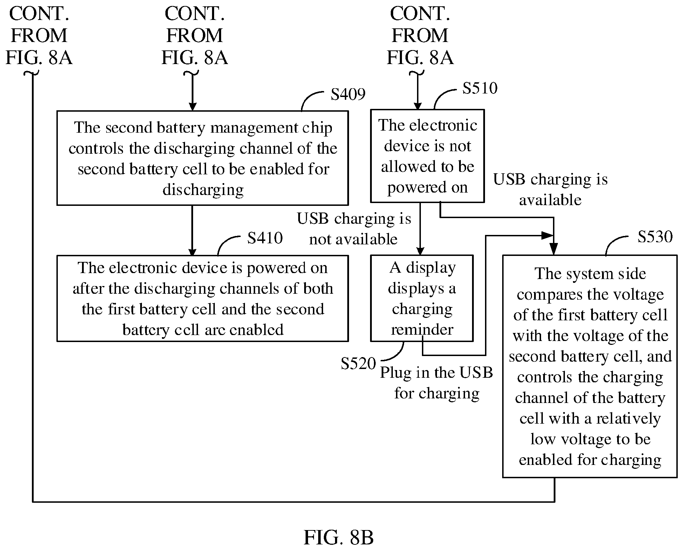

FIG. 8A and FIG. 8B are a schematic flowchart of still another battery management method according to an embodiment of this application.

As shown in FIG. 8, the method 500 may include S406 to S410, and may further include the following S510 to S530. For descriptions of S406 to S410, reference may be made to the foregoing descriptions of FIG. 7. Details are not described herein again. Abnormal power-on solutions with a large voltage difference between dual batteries related to S510 to S530 are separately described in detail below.

S510: After S408, if the system side determines that the voltage difference between the first battery cell and the second battery cell is greater than the power-on voltage difference threshold, the electronic device is not allowed to be powered on. In this case, S520 may be performed when the power-on level is triggered by a button; and S530 may be performed when the power-on level is triggered by USB charging.

It should be understood that the electronic device cannot be powered on when the voltage difference between the two battery cells is relatively large. In this case, if the electronic device is powered on, the problems of a high short-circuit current and component burnout may arise.

For descriptions of trigger sources of the power-on level, reference may be made to the foregoing descriptions in S402. Details are not described herein again.

S520: A display displays a charging reminder.

The charging reminder indicates a reminder to remind the user to plug in the charger to charge the electronic device. Specific content may be set as required. This is not limited in this embodiment of this application.

For example, FIG. 16 is a schematic diagram of a prompt interface according to an embodiment of this application.

As shown in FIG. 16, a first interface may be displayed on a display of an electronic device, and the first interface may include text content "Low battery. Please plug in a charger for charging". In addition, the first interface may further include another icon, such as an icon of a USB connector. A form and content of the first interface may be set as required. This is not limited in this embodiment of this application.

It should be noted that the voltage of the first battery cell satisfies the power-on voltage condition. Therefore, when the power-on level is triggered by a button, the first battery cell may supply power to the system side in response to a button operation, so as to support the display to display the prompt interface shown in FIG. 16.

It should be understood that the prompt interface is actually displayed when the electronic device is in a powered-off state before power-on.

After S520, if the user plugs in the charger to charge the electronic device, S530 may be performed in response to the user operation to charge the battery cell with a relatively low voltage.

S530: The system side compares a voltage of the first battery cell with a voltage of the second battery cell, and enables the charging channel of the battery cell with a relatively low voltage.

It should be understood that a voltage difference between the first battery cell and the second battery cell is relatively large. To reduce the voltage difference between the two battery cells, a voltage magnitude between the first battery cell and the second battery cell may be compared, and the battery cell with a relatively low voltage is charged to increase the voltage of the battery cell, so that the voltage difference between the first battery cell and the second battery cell may be reduced.

For example, a voltage of the first battery cell satisfies the power-on voltage condition, for example, the voltage is 3 V; and a voltage difference between the voltage of the first battery cell and a voltage of the second battery cell is relatively large, for example, the voltage difference is 2.5 V, and 2.5 V is greater than the power-on voltage difference threshold. In this case, the electronic device is not allowed to be powered on. Because the voltage of the second battery cell may be 5.5 V or 0.5 V, after the system side compares the voltage of the first battery cell with the voltage of the second battery cell, the voltage of the first battery cell is lower when the voltage of the second battery cell is 5.5 V, therefore, the charging channel of the first battery cell may be enabled for charging; and the voltage of the second battery cell is lower when the voltage of the second battery cell is 0.5 V, therefore, the charging channel of the second battery cell may be enabled for charging.

Optionally, it is possible to continuously return to perform S408 during charging after S530, and the system side determines a voltage difference between the first battery cell and the second battery cell in real time. If the voltage difference is still greater than the power-on voltage difference threshold, the steps from S510 to S530 are cyclically performed. Until the voltage difference between the first battery cell and the second battery cell is charged to be less than or equal to the power-on voltage difference threshold, the foregoing cycle is exited, and S409 and S410 are performed.

Optionally, in one embodiment, before S406, the method 500 may further include S401 to S405. That is, the battery management method provided in this embodiment of this application may include S401 to S405, S406 to S410, and S510 to S530.

In this embodiment of this application, in response to the power-on level being triggered, before power-on, a voltage of the first battery cell is detected. If the voltage satisfies the power-on voltage condition, the discharging channel of the first battery cell may be first enabled, and the discharging channel of the second battery cell remains disabled. Then, a voltage difference between the two battery cells is detected, and when it is determined that the voltage difference is greater than the power-on voltage difference threshold, to avoid the problems of a high short-circuit current and component burnout when the discharging channels are enabled at the same time due to a large voltage difference between the two battery cells, it is set in this application that the electronic device is not allowed to be powered on first, instead, it is determined whether the power-on level is triggered by USB charging. When the power-on level is triggered by USB charging, it indicates that power may be supplied to the battery cell. Therefore, voltage magnitudes of the two battery cells may be compared. The charging channel of the battery cell with a relatively low voltage among the two battery cells is controlled to be enabled to charge the battery cell, so as to increase the voltage of the battery cell until the voltage difference between the two battery cells is reduced to satisfy a condition of being less than or equal to the power-on voltage difference threshold.

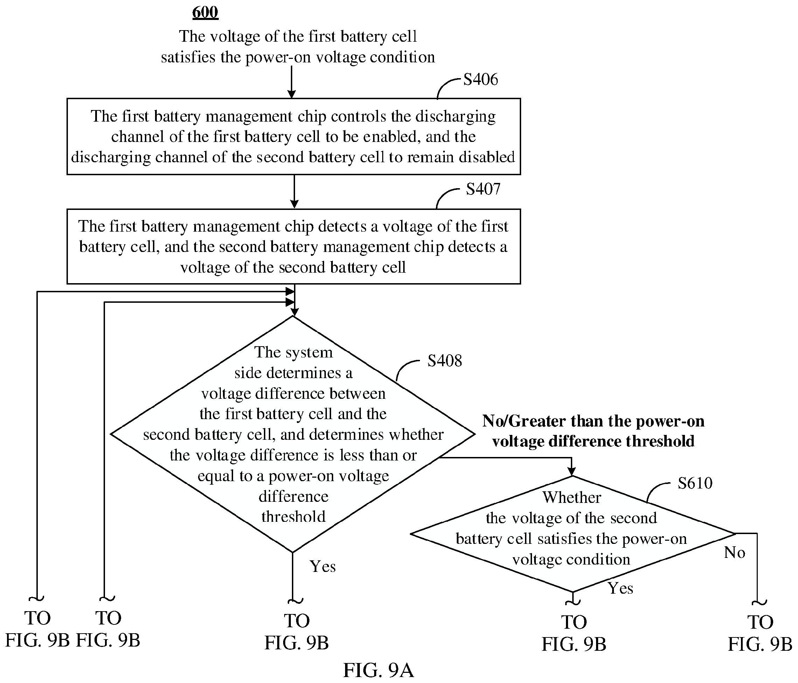

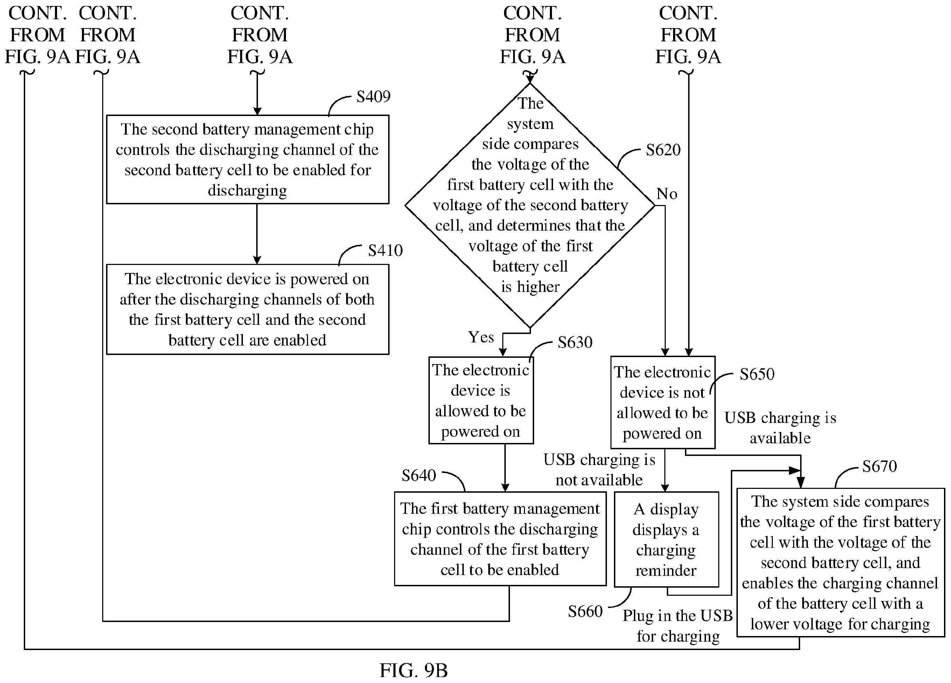

FIG. 9A and FIG. 9B are a schematic flowchart of still another battery management method according to an embodiment of this application.

As shown in FIG. 9, the method 600 may include S406 to S410, and may further include the following S610 to S670. For descriptions of S406 to S410, reference may be made to the foregoing descriptions of FIG. 7. Details are not described herein again. For descriptions of S650 to S670, reference may be made to the foregoing descriptions of FIG. 8. Details are not described herein again.

Abnormal power-on solutions with a large voltage difference between dual batteries related to S501 to S504 are separately described in detail below.

S610: After S408, if the system side determines that the voltage difference between the first battery cell and the second battery cell is greater than the power-on voltage difference threshold, it may be determined whether the voltage of the second battery cell satisfies the power-on voltage condition.

In this case, S620 may be performed when the voltage of the second battery cell satisfies the power-on voltage condition; and S650 may be performed when the voltage of the second battery cell does not satisfy the power-on voltage condition.

It should be understood that in this case, the voltage difference between the two battery cells is relatively large, so that the electronic device cannot be powered on. If the electronic device is powered on, an existing short circuit problem may occur.

For descriptions of trigger sources of the power-on level, reference may be made to the foregoing descriptions in S402. Details are not described herein again.

S620: When the voltage of the second battery cell satisfies the power-on voltage condition, the system side compares the voltage of the first battery cell with the voltage of the second battery cell to determine whether the voltage of the first battery cell is higher than the voltage of the second battery cell. When it is determined that the voltage of the first battery cell is higher than the voltage of the second battery cell, S630 is performed; and when it is determined that the voltage of the first battery cell is lower than the voltage of the second battery cell, S650 may be performed.

S630: The electronic device is allowed to be powered on.

S640: The first battery management chip controls the first battery cell to discharge.

It should be understood that in S406, the first battery management chip has controlled the discharging channel of the first battery cell to be enabled. However, it may be learned by comparing the voltages that the voltage of the first battery cell is still higher than the voltage of the second battery cell, and the voltage difference between the two battery cells is greater than the power-on voltage difference threshold. Therefore, the first battery cell with a higher voltage may be further discharged to lower the voltage of the first battery cell, thereby reducing the voltage difference between the first battery cell and the second battery cell.

For example, a voltage of the first battery cell satisfies the power-on voltage condition, for example, the voltage is 6 V. A voltage difference between the voltage of the first battery cell and a voltage of the second battery cell is relatively large, for example, the voltage difference is 2.5 V, 2.5 V is greater than the power-on voltage difference threshold, and the voltage of the second battery cell is 3.5 V, which also satisfies the power-on voltage condition. In addition, the voltage of the first battery cell is further higher than the voltage of the second battery cell. In this case, because the discharging channel of the first battery cell is first enabled, when the voltage of the first battery cell is relatively high, the voltage difference may be reduced by lowering the voltage of the first battery cell.

Optionally, it is possible to continuously return to perform S408 during discharging after S640, and the system side continuously determines a voltage difference between the first battery cell and the second battery cell. If the voltage difference is greater than the power-on voltage difference threshold, the steps from S610 to S640 are cyclically performed. Until the voltage difference between the first battery cell and the second battery cell is discharged to be less than or equal to the power-on voltage difference threshold, the foregoing cycle is exited, and S409 and S410 are performed.

S650: When the voltage of the second battery cell does not satisfy the power-on voltage condition, or when the voltage of the second battery cell satisfies the power-on voltage condition, but the voltage of the second battery cell is higher than the voltage of the first battery cell, the electronic device is not allowed to be powered. In this case, when the power-on level is triggered by a button, S660 may be performed; and when the power-on level is triggered by USB charging, S670 may be performed.

S660: Prompt the user to plug in a charger for charging.

After S660, if the user plugs in the charger to charge the electronic device, S670 may be performed in response to the user operation to charge the battery cell with a relatively low voltage.

S670: The system side compares the voltage of the first battery cell with the voltage of the second battery cell, and enables the charging channel of the battery cell with a relatively low voltage for charging.

It should be understood that S650 includes two cases. For example, case 1: A voltage of the first battery cell satisfies the power-on voltage condition, and a voltage difference between the first battery cell and the second battery cell is greater than the power-on voltage difference threshold, but a voltage of the second battery cell does not satisfy the power-on voltage condition. In this case, it indicates that the voltage of the first battery cell is higher, and the voltage of the second battery cell is relatively low. In this way, after the system side compares the voltages, the second battery cell with a lower voltage may be charged when USB charging is available.

Case 2: A voltage of the first battery cell satisfies the power-on voltage condition, a voltage difference between the first battery cell and the second battery cell is greater than the power-on voltage difference threshold, and a voltage of the second battery cell also satisfies the power-on voltage condition, but the voltage of the second battery cell is higher, and the voltage of the first battery cell is relatively low. In this way, after the system side compares the voltages, the first battery cell with a lower voltage may be charged when USB charging is available.

Optionally, it is possible to continuously return to perform S408 during charging after S670, and the system side continuously determines a voltage difference between the first battery cell and the second battery cell. If the voltage difference is greater than the power-on voltage difference threshold, the steps from S610 to S640 are cyclically performed. Until the voltage difference between the first battery cell and the second battery cell is charged to be less than or equal to the power-on voltage difference threshold, the foregoing cycle is exited, and S409 and S410 are performed.

Optionally, in one embodiment, before S406, the method 500 may further include S401 to S405. That is, the battery management method provided in this embodiment of this application may include S401 to S405, S406 to S410, and S610 to S670.

In this embodiment of this application, in response to the power-on level being triggered, before power-on, a voltage of the first battery cell is detected. If the voltage satisfies the power-on voltage condition, the discharging channel of the first battery cell may be first enabled, and the discharging channel of the second battery cell remains disabled. Then, a voltage difference between the two battery cells is detected, and when it is determined that the voltage difference is still greater than the power-on voltage difference threshold, to avoid the problems of a high short-circuit current and component burnout when the discharging channels are enabled at the same time due to a large voltage difference between the two battery cells, it is set in this application to continue to determine whether a voltage of the second battery cell satisfies the power-on voltage condition. When both the first battery cell and the second battery cell satisfy the power-on voltage condition and the voltage of the first battery cell is relatively high, the first battery cell is controlled to discharge to lower the voltage of the first battery cell until the voltage difference between the two battery cells is reduced to be less than or equal to the power-on voltage difference threshold.

In addition, for other cases, the electronic device is not allowed to be powered on first, instead, it is determined whether the power-on level is triggered by USB charging. When the power-on level is triggered by USB charging, the charging channel of the battery cell with a relatively low voltage among the two battery cells is controlled to be enabled to charge the battery cell, so as to increase the voltage of the battery cell until the voltage difference between the two battery cells is reduced to satisfy a condition of being less than or equal to the power-on voltage difference threshold.

Next, a specific process of the battery management methods shown in FIG. 6 to FIG. 9 is described in detail. In the following example, the first battery cell is a main battery, the second battery cell is a secondary battery, and the discharging channel of the main battery is first enabled by default.

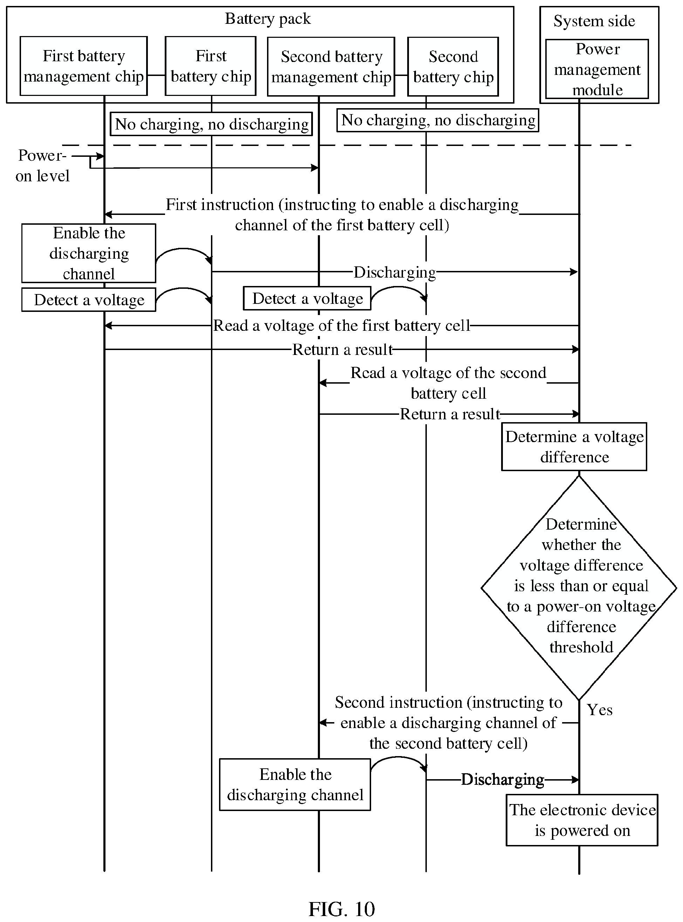

FIG. 10 is a schematic diagram of module interaction of a battery management method according to an embodiment of this application.

As shown in FIG. 10, the method may include S1001 to S1018.

S1001: Both charging and discharging channels of a first battery cell are disabled, without charging and discharging.

S1002: Both charging and discharging channels of a second battery cell are disabled, without charging and discharging.

S1003: A first battery management chip and a second battery management chip receive a power-on level.

S1004: A power management module sends a first instruction to the first battery management chip, where the first instruction instructs to enable the discharging channel of the first battery cell.

S1005: The first battery management chip controls, in response to the first instruction, the discharging channel of the first battery cell to be enabled.

S1006: The first battery cell is discharged.

S1007: The first battery management chip detects a voltage of the first battery cell.

S1008: The second battery management chip detects a voltage of the second battery cell.

S1009: The power management module reads the voltage of the first battery cell, or sends a read instruction.

S1010: The first battery management chip returns a result to the power management module.

S1011: The power management module reads the voltage of the second battery cell, or in other words, sends a read instruction.

S1012: The second battery management chip returns a result to the power management module.

S1013: The power management module determines a voltage difference between the first battery cell and the second battery cell.

S1014: The power management module determines whether the voltage difference is less than or equal to a power-on voltage difference threshold.

S1015: If yes (the voltage difference is less than or equal to the power-on voltage difference threshold), a second instruction is sent to the second battery cell, where the second instruction instructs the second power management chip to enable the discharging channel of the second battery cell.

S1016: The second battery management chip controls, in response to the second instruction, the discharging channel of the second battery cell to be enabled.

S1017: The second battery cell is discharged.

S1018: The electronic device is powered on after the discharging channels of both the first battery cell and the second battery cell are enabled.

For descriptions and effect analysis of S1001 to S1018, reference may be made to the foregoing descriptions and effect analysis of all steps in FIG. 6. Details are not described herein again.

The foregoing is only an example. An execution sequence of all steps may be changed. In addition, another step may be added or some steps may be deleted. This is not limited in this embodiment of this application.

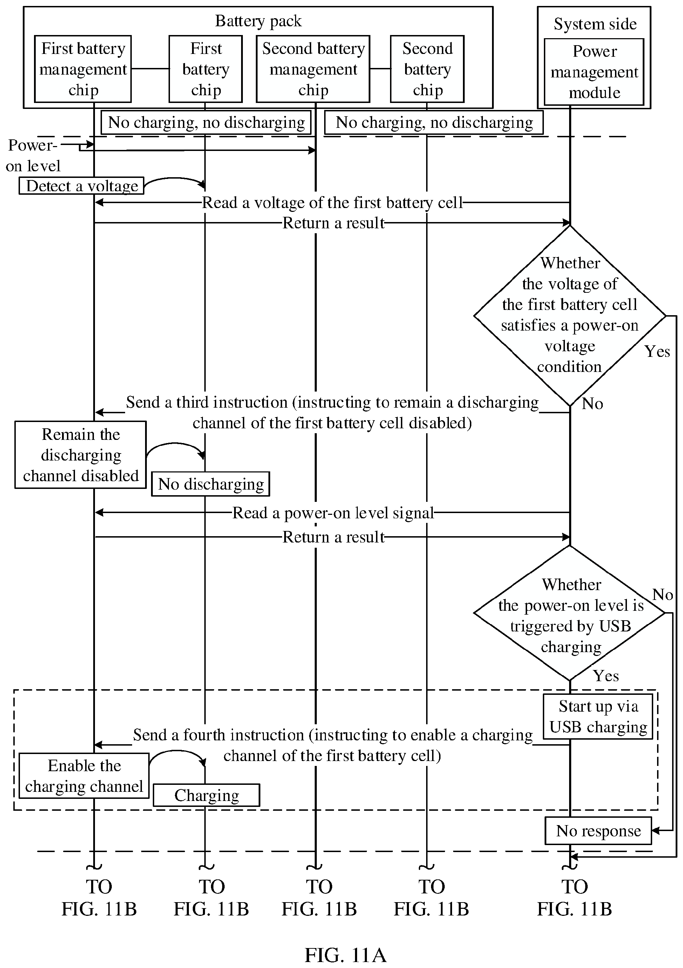

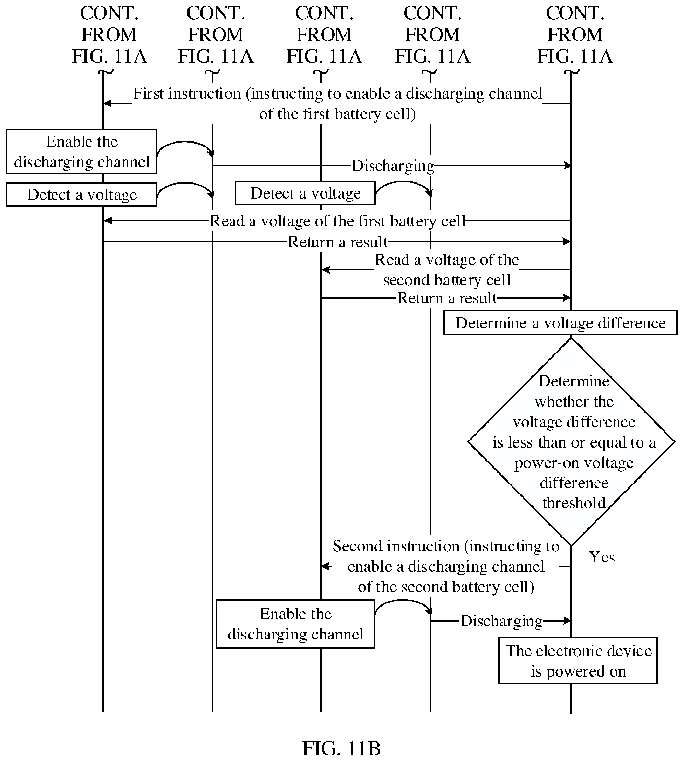

FIG. 11A and FIG. 11B are a schematic diagram of module interaction of another battery management method according to an embodiment of this application.

As shown in FIG. 11, the method may include S1101 to S1133.

S1101: Both charging and discharging channels of a first battery cell are disabled, without charging and discharging.

S1102: Both charging and discharging channels of a second battery cell are disabled, without charging and discharging.

S1103: A first battery management chip and a second battery management chip receive a power-on level.

S1104: The first battery management chip detects a voltage of the first battery cell.

S1105: A power management module reads the voltage of the first battery cell, or in other words, sends a read instruction.

S1106: The first battery management chip returns a result to the power management module.

S1107: The power management module determines whether the voltage of the first battery cell satisfies a power-on voltage condition; and if yes, S1119 is performed; or if no, S1108 is performed.

S1108: The power management module sends a third instruction to the first battery management chip, where the third instruction is used to instruct to remain the discharging channel of the first battery cell disabled.

S1109: The first battery management chip controls, in response to the third instruction, the discharging channel of the first battery cell to remain disabled.

S1110: The first battery cell is not discharged.

S1111: The power management module reads a power-on level signal received by the first battery cell.

S1112: The first battery cell returns a result.

S1113: The power management module determines whether the power-on level is triggered by USB charging; and if yes, S1114 is performed; or if no, S1118 is performed.

S1114: A system side (including the power management module) starts up via USB charging.

S1115: The power management module sends a fourth instruction to the first battery cell, where the fourth instruction is used to instruct to enable the charging channel of the first battery cell.

S1116: The first battery management chip controls, in response to the fourth instruction, the charging channel of the first battery cell to be enabled.

S1117: The first battery cell is charged.

S1118: The system side has no response, waiting for plugging in a USB for charging.

S1119: The power management module sends a first instruction to the first battery management chip, where the first instruction instructs to enable the discharging channel of the first battery cell.

S1120: The first battery management chip controls, in response to the first instruction, the discharging channel of the first battery cell to be enabled.

S1121: The first battery cell is discharged.

S1122: The first battery management chip detects a voltage of the first battery cell.

S1123: The second battery management chip detects a voltage of the second battery cell.

S1124: The power management module reads the voltage of the first battery cell, or in other words, sends a read instruction.

S1125: The first battery management chip returns a result to the power management module.

S1126: The power management module reads the voltage of the second battery cell, or in other words, sends a read instruction.

S1127: The second battery management chip returns a result to the power management module.

S1128: The power management module determines a voltage difference between the first battery cell and the second battery cell.

S1129: The power management module determines whether the voltage difference is less than or equal to a power-on voltage difference threshold.

S1130: If yes (the voltage difference is less than or equal to the power-on voltage difference threshold), a second instruction is sent to the second battery cell, where the second instruction instructs the second power management chip to enable the discharging channel of the second battery cell.

S1131: The second battery management chip controls, in response to the second instruction, the discharging channel of the second battery cell to be enabled.

S1132: The second battery cell is discharged.

S1133: The electronic device is powered on after the discharging channels of both the first battery cell and the second battery cell are enabled.

For descriptions and effect analysis of S1101 to S1133, reference may be made to the foregoing descriptions and effect analysis of all steps in FIG. 7. Details are not described herein again.

The foregoing is only an example. An execution sequence of all steps may be changed. In addition, another step may be added or some steps may be deleted. This is not limited in this embodiment of this application.

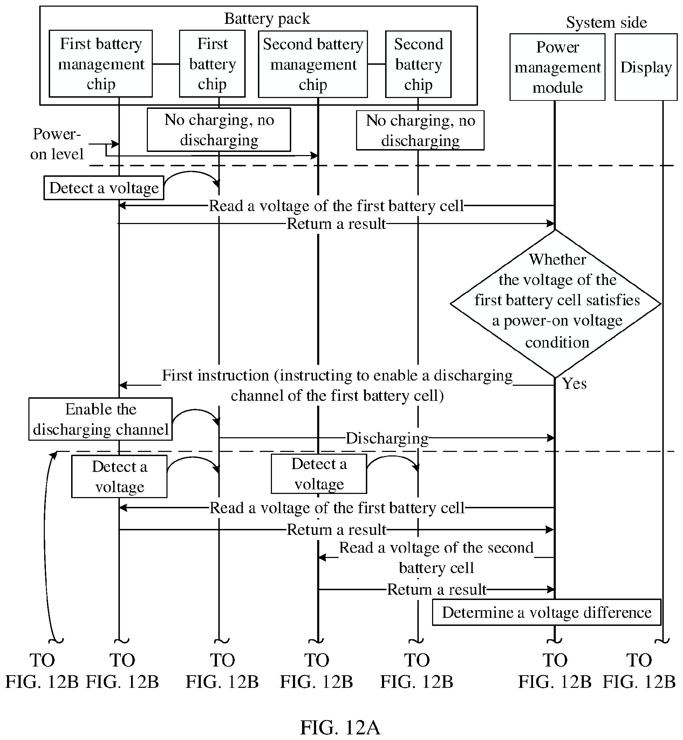

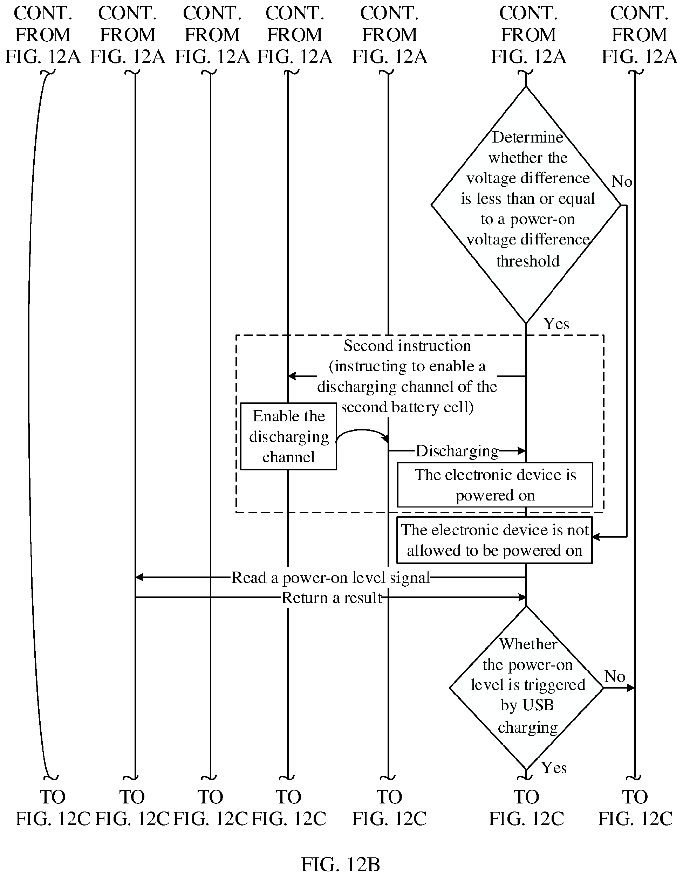

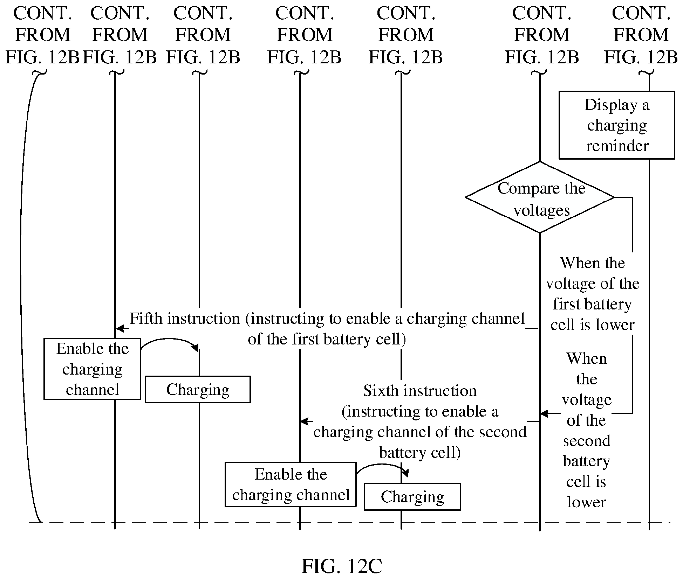

FIG. 12A, FIG. 12B, and FIG. 12C are a schematic diagram of module interaction of still another battery management method according to an embodiment of this application.

As shown in FIG. 12, the method may include S1201 to S1244.

S1201: Both charging and discharging channels of a first battery cell are disabled, without charging and discharging.

S1202: Both charging and discharging channels of a second battery cell are disabled, without charging and discharging.

S1203: A first battery management chip and a second battery management chip receive a power-on level.

S1204: The first battery management chip detects a voltage of the first battery cell.

S1205: A power management module reads the voltage of the first battery cell, or in other words, sends a read instruction.

S1206: The first battery management chip returns a result to the power management module.

S1207: The power management module determines whether the voltage of the first battery cell satisfies a power-on voltage condition; and if yes, S1219 is performed; or if no, S1208 is performed.

S1208: The power management module sends a third instruction to the first battery management chip, where the third instruction is used to instruct to remain the discharging channel of the first battery cell disabled.

S1209: The first battery management chip controls, in response to the third instruction, the discharging channel of the first battery cell to remain disabled.

S1210: The first battery cell is not discharged.

S1211: The power management module reads a power-on level signal received by the first battery cell.

S1212: The first battery cell returns a result.

S1213: The power management module determines whether the power-on level is triggered by USB charging; and if yes, S1214 is performed; or if no, S1218 is performed.

S1214: A system side (including the power management module) starts up via USB charging.

S1215: The power management module sends a fourth instruction to the first battery cell, where the fourth instruction is used to instruct to enable the charging channel of the first battery cell.

S1216: The first battery management chip controls, in response to the fourth instruction, the charging channel of the first battery cell to be enabled.

S1217: The first battery cell is charged.

S1218: The system side has no response, waiting for plugging in a USB for charging.

S1219: The power management module sends a first instruction to the first battery management chip, where the first instruction instructs to enable the discharging channel of the first battery cell.

S1220: The first battery management chip controls, in response to the first instruction, the discharging channel of the first battery cell to be enabled.

S1221: The first battery cell is discharged.

S1222: The first battery management chip detects a voltage of the first battery cell.

S1223: The second battery management chip detects a voltage of the second battery cell.

S1224: The power management module reads the voltage of the first battery cell, or in other words, sends a read instruction.

S1225: The first battery management chip returns a result to the power management module.

S1226: The power management module reads the voltage of the second battery cell, or in other words, sends a read instruction.

S1227: The second battery management chip returns a result to the power management module.

S1228: The power management module determines a voltage difference between the first battery cell and the second battery cell.

S1229: The power management module determines whether the voltage difference is less than or equal to a power-on voltage difference threshold; and if yes, S1230 is performed; or if no, S1234 is performed.

S1230: If yes (that is, the voltage difference is less than or equal to the power-on voltage difference threshold), the power management module sends a second instruction to the second battery cell, where the second instruction instructs the second power management chip to enable the discharging channel of the second battery cell.

S1231: The second battery management chip controls, in response to the second instruction, the discharging channel of the second battery cell to be enabled.

S1232: The second battery cell is discharged.

S1233: The electronic device is powered on after the discharging channels of both the first battery cell and the second battery cell are enabled.

S1234: If no, S1237 or S1238 is performed based on a result determined in S1213 regarding whether the power-on level is triggered by USB charging; alternatively, if no (that is, the voltage difference is greater than the power-on voltage difference threshold), the power management module reads the power-on level signal received by the first battery cell.

S1235: The first battery cell returns a result.

S1236: The power management module determines whether the power-on level is triggered by USB charging; and if yes, S1238 is performed; or if no, S1237 is performed.

S1237: A display displays a charging reminder, waiting for charging.

S1238: The power management module compares the voltage of the first battery cell with the voltage of the second battery cell. When the voltage of the first battery cell is lower, S1239 is performed; and when the voltage of the second battery cell is lower, S1242 is performed.

S1239: The power management module sends a fifth instruction to the first battery cell, where the fifth instruction is used to instruct the first power management chip to control the charging channel of the first battery cell to be enabled.

S1240: The first battery management chip enables the charging channel of the first battery cell in response to the fifth instruction.

S1241: The first battery cell is charged.

S1242: The power management module sends a sixth instruction to the second battery cell, where the sixth instruction is used to instruct the second power management chip to control the charging channel of the second battery cell to be enabled.

S1243: The second battery management chip enables the charging channel of the second battery cell in response to the sixth instruction.

S1244: The second battery cell is charged.

After charging, it is possible to return to perform S1222 and S1223 among the foregoing steps.

For descriptions and effect analysis of S1201 to S1244, reference may be made to the foregoing descriptions and effect analysis of all steps in FIG. 9. Details are not described herein again.

The foregoing is only an example. An execution sequence of all steps may be changed. In addition, another step may be added or some steps may be deleted. This is not limited in this embodiment of this application.

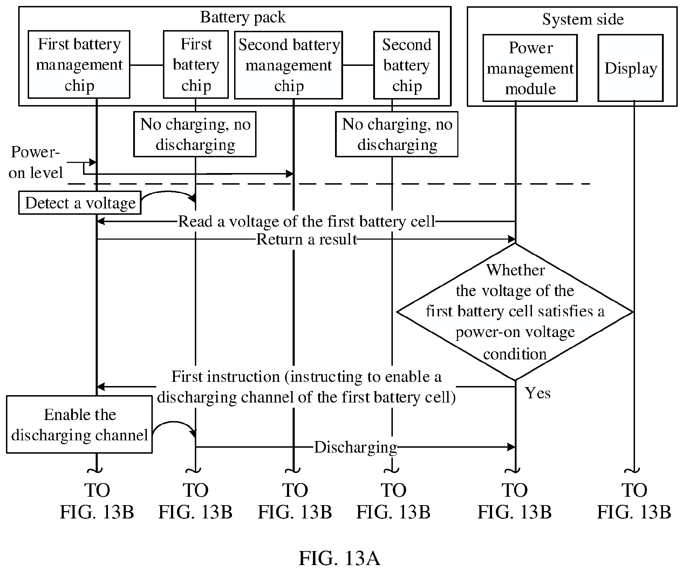

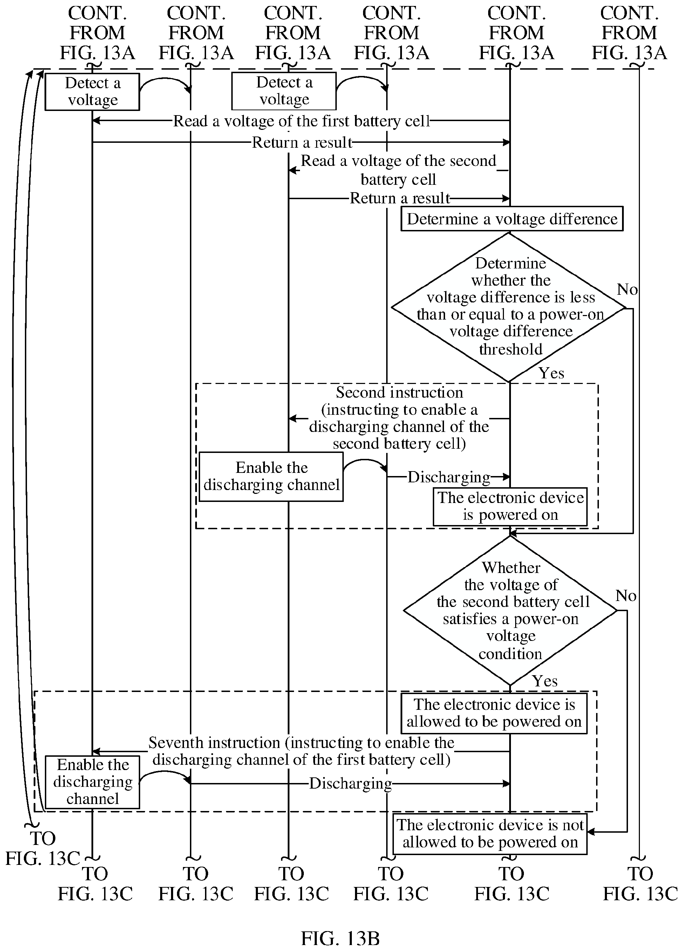

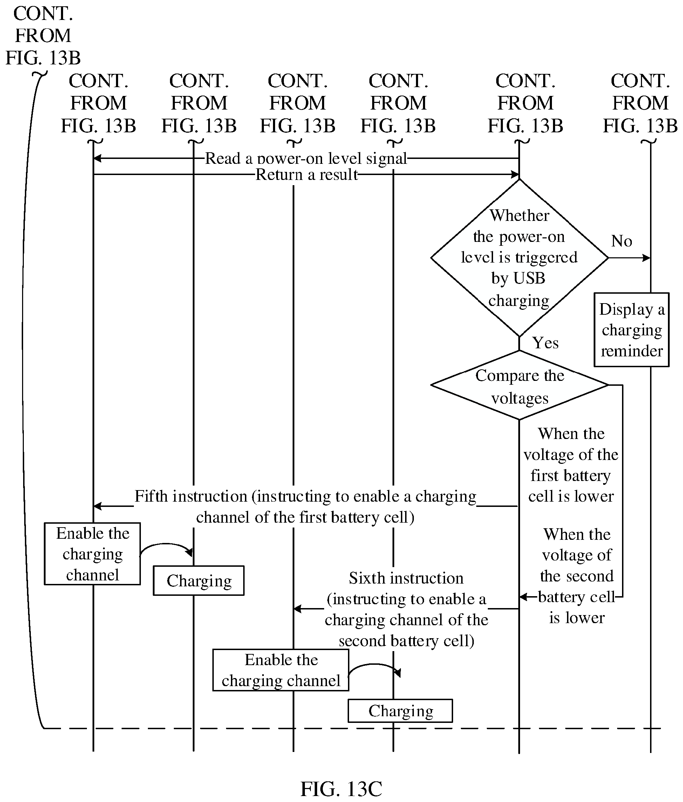

FIG. 13A, FIG. 13B, and FIG. 13C are a schematic diagram of module interaction of still another battery management method according to an embodiment of this application.

As shown in FIG. 13, the method may include S1301 to S1344.

S1301: Both charging and discharging channels of a first battery cell are disabled, without charging and discharging.

S1302: Both charging and discharging channels of a second battery cell are disabled, without charging and discharging.

S1303: A first battery management chip and a second battery management chip receive a power-on level.

S1304: The first battery management chip detects a voltage of the first battery cell.

S1305: A power management module reads the voltage of the first battery cell, or in other words, sends a read instruction.

S1306: The first battery management chip returns a result to the power management module.

S1307: The power management module determines whether the voltage of the first battery cell satisfies a power-on voltage condition; and if yes, S1319 is performed; or if no, S1308 is performed.

S1308: The power management module sends a third instruction to the first battery management chip, where the third instruction is used to instruct to remain the discharging channel of the first battery cell disabled.

S1309: The first battery management chip controls, in response to the third instruction, the discharging channel of the first battery cell to remain disabled.

S1310: The first battery cell is not discharged.

S1311: The power management module reads a power-on level signal received by the first battery cell.

S1312: The first battery cell returns a result.

S1313: The power management module determines whether the power-on level is triggered by USB charging; and if yes, S1314 is performed; or if no, S1318 is performed.

S1314: A system side (including the power management module) starts up via USB charging.

S1315: The power management module sends a fourth instruction to the first battery cell, where the fourth instruction is used to instruct to enable the charging channel of the first battery cell.

S1316: The first battery management chip controls, in response to the fourth instruction, the charging channel of the first battery cell to be enabled.

S1317: The first battery cell is charged.

S1318: The system side has no response, waiting for plugging in a USB for charging.

S1319: The power management module sends a first instruction to the first battery management chip, where the first instruction instructs to enable the discharging channel of the first battery cell.

S1320: The first battery management chip controls, in response to the first instruction, the discharging channel of the first battery cell to be enabled.

S1321: The first battery cell is discharged.

S1322: The first battery management chip detects a voltage of the first battery cell.

S1323: The second battery management chip detects a voltage of the second battery cell.

S1324: The power management module reads the voltage of the first battery cell, or in other words, sends a read instruction.

S1325: The first battery management chip returns a result to the power management module.

S1326: The power management module reads the voltage of the second battery cell, or in other words, sends a read instruction.

S1327: The second battery management chip returns a result to the power management module.

S1328: The power management module determines a voltage difference between the first battery cell and the second battery cell.

S1329: The power management module determines whether the voltage difference is less than or equal to a power-on voltage difference threshold; and if yes, S1330 is performed; or if no, S1334 is performed.

S1330: If yes (that is, the voltage difference is less than or equal to the power-on voltage difference threshold), the power management module sends a second instruction to the second battery cell, where the second instruction instructs the second power management chip to enable the discharging channel of the second battery cell.

S1331: The second battery management chip controls, in response to the second instruction, the discharging channel of the second battery cell to be enabled.

S1332: The second battery cell is discharged.

S1333: The electronic device is powered on after the discharging channels of both the first battery cell and the second battery cell are enabled.

S1334: If no, the power management module determines whether the voltage of the second battery cell satisfies a power-on voltage condition; and if yes, S1335 is performed; or if no, S1339 is performed.

S1335: The electronic device is allowed to be powered on.

S1336: The power management module sends a seventh instruction to the first battery management chip, where the seventh instruction is used to instruct the discharging channel of the first battery cell to be enabled.

S1337: The first battery management chip controls, in response to the seventh instruction, the discharging channel of the first battery cell to be enabled.

S1338: The first battery cell is discharged.

It should be understood that, in a process in which the first battery cell is discharged and the voltage decreases, it is possible to return to perform S1322 and S1323.

S1339: The electronic device is not allowed to be powered on.

S1340: S1343 or S1344 is performed based on a result determined in S1313 regarding whether the power-on level is triggered by USB charging; alternatively, the power management module reads the power-on level signal received by the first battery cell.

S1341: The first battery cell returns a result.

S1342: The power management module determines whether the power-on level is triggered by USB charging; and if yes, S1344 is performed; or if no, S1343 is performed.

S1343: A display displays a charging reminder, waiting for charging.

S1344: The power management module compares the voltage of the first battery cell with the voltage of the second battery cell. When the voltage of the first battery cell is lower, S1345 is performed; and when the voltage of the second battery cell is lower, S1348 is performed.

S1345: The power management module sends a fifth instruction to the first battery cell, where the fifth instruction is used to instruct the first power management chip to control the charging channel of the first battery cell to be enabled.

S1346: The first battery management chip enables the charging channel of the first battery cell in response to the fifth instruction.

S1347: The first battery cell is charged.

S1348: The power management module sends a sixth instruction to the second battery cell, where the sixth instruction is used to instruct the second power management chip to control the charging channel of the second battery cell to be enabled.

S1349: The second battery management chip enables the charging channel of the second battery cell in response to the sixth instruction.

S1350: The second battery cell is charged.

After charging, it is possible to return to perform S1322 and S1323 among the foregoing steps.

For descriptions and effect analysis of S1301 to S1350, reference may be made to the foregoing descriptions and effect analysis of all steps in FIG. 10. Details are not described herein again.

The foregoing is only an example. An execution sequence of all steps may be changed. In addition, another step may be added or some steps may be deleted. This is not limited in this embodiment of this application.

All the foregoing battery management methods are described by using electronic devices that respectively include two batteries connected in parallel. The following uses three batteries connected in parallel as an example to describe a distribution structure of still another electronic device according to an embodiment of this application and a corresponding battery management method.

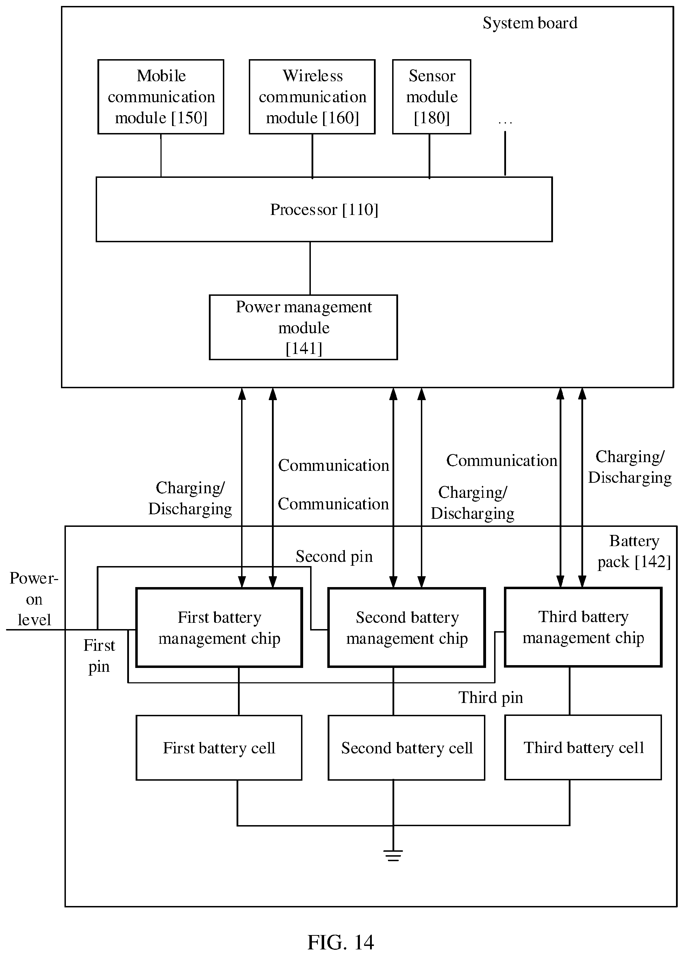

FIG. 14 is a schematic diagram of a distribution structure of still another electronic device according to an embodiment of this application.

Compared with the structure shown in FIG. 4, in addition to the first battery branch and the second battery branch, the electronic device shown in FIG. 14 may further include a third battery branch connected in parallel with the first battery branch and the second battery branch. A battery cell in the third battery branch may be referred to as a third battery cell. After the electronic device is powered off, a discharge tube of the third battery cell still remains in an on state.

As shown in FIG. 14, the third battery branch further includes a third battery management chip. One end of the third battery management chip is connected to a power management module located on a system board, and the other end is connected to the third battery cell. The third battery management chip is configured to enable or disable charging and discharging channels of the third battery cell. In addition, the third battery management chip may further manage a communication channel between the third battery cell and the power management module. The third battery management module supports a system-side channel to read battery data of the third battery cell by means of IIC communication.

For example, as shown in FIG. 14, a third pin of the third battery management chip is configured to receive a power-on level. When the third pin receives the power-on level, the third battery management chip is configured to trigger to exit the ultra-low power mode, and enable the discharging channel of the third battery cell.

Optionally, in a possible implementation, the third pin may be a GPIO pin.

Optionally, in another possible implementation, the third pin is an interrupt pin.

A power-off solution related to the electronic device shown in FIG. 14 is similar to the procedure shown in FIG. 5. For details, reference may be made to the foregoing descriptions of FIG. 5. Details are not described herein again.

In a normal power-on solution related to the electronic device shown in FIG. 14, based on the procedure shown in FIG. 6, voltage detection and charge/discharge control of the third battery cell are added. Details are not described herein again.

According to a first abnormal power-on solution related to the electronic device shown in FIG. 14, a procedure in which a voltage of the first battery cell does not satisfy a power-on voltage condition is similar to the procedure shown in FIG. 7. Details are not described herein again.

According to a second abnormal power-on solution related to the electronic device shown in FIG. 14, in a procedure in which a voltage difference between the battery cells is large, voltage detection and charge/discharge control of the third battery cell are added on the basis of FIG. 8.

To resolve a safety problem of a large voltage difference among three battery cells, an embodiment of this application further provides a battery management method. The battery management method provided in this embodiment of this application is described in detail below with reference to the accompanying drawings.

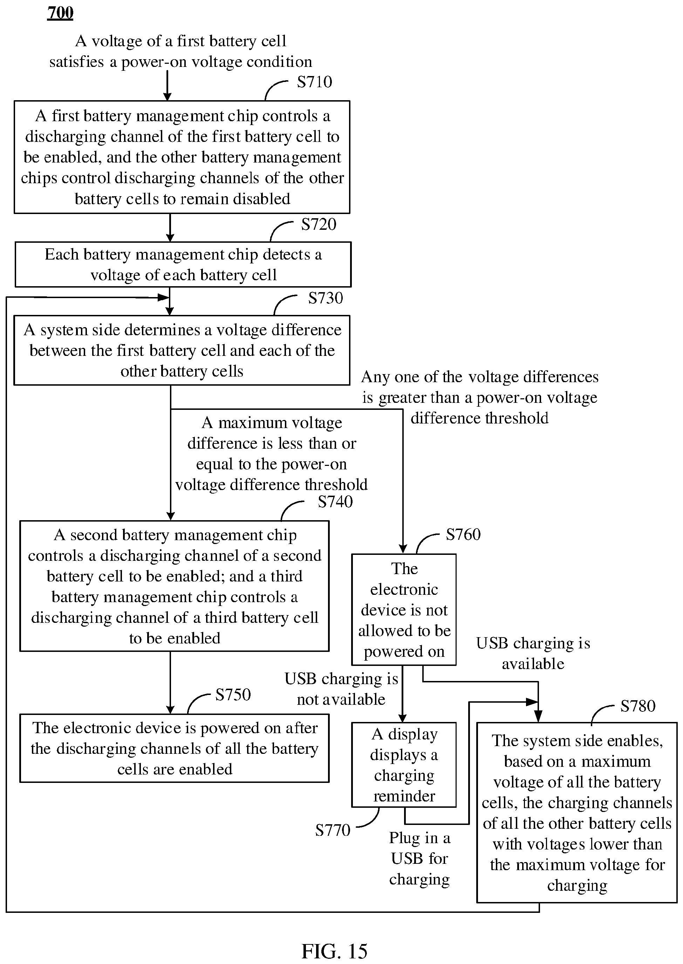

FIG. 15 is a schematic flowchart of a battery management method according to an embodiment of this application. As shown in FIG. 15, the method 700 may include the following S710 to S780. The following describes S710 to S780 in detail.

S710: When a voltage of a first battery cell satisfies a power-on voltage condition, a first battery management chip may control a discharging channel of the first battery cell to be enabled, and other battery management chips control discharging channels of other battery cells to remain disabled.

S720: Each battery management chip detects a voltage of each battery cell.

For example, the first battery management chip detects a voltage of the first battery cell, a second battery management chip detects a voltage of a second battery cell, and a third battery management chip detects a voltage of a third battery cell.

It should be understood that because the first battery cell is discharged, the voltage of the first battery cell changes. Therefore, the first battery management chip may be used again to detect a voltage of the first battery cell.

S730: A system side determines a voltage difference between the first battery cell and each of the other battery cells.

It should be understood that for the three battery cells connected in parallel as shown in FIG. 14, the system side needs to determine a voltage difference between the first battery cell and the second battery cell, and needs to determine a voltage difference between the first battery cell and the third battery cell.

S740: After S730, when a maximum voltage difference among a plurality of determined voltage differences is less than or equal to a power-on voltage difference threshold, other battery management chips other than the first battery management chip control respective discharging channel of a corresponding battery cell to be enabled.

It should be understood that for the three battery cells connected in parallel as shown in FIG. 14, when it is determined that the maximum voltage difference is less than or equal to the power-on voltage difference threshold, it indicates that all voltage differences are less than or equal to the power-on voltage difference threshold, and all voltage differences are small, so that the problem of a high short-circuit current does not arise. Therefore, each battery management chip may control a discharging channel of corresponding battery cell to be enabled to discharge the battery cell.

S750: The electronic device is powered on after the discharging channels of all the battery cells are enabled.

S760: After S730, when any one of a plurality of determined voltage differences is greater than the power-on voltage difference threshold, the electronic device is not allowed to be powered on. In this case, when a power-on level is triggered by a button, S770 may be performed, and when a power-on level is triggered by USB charging, S780 may be performed.

It should be understood that when any one of the other voltage differences is greater than the power-on voltage difference threshold, it indicates that a voltage difference between two battery cells is relatively large. In this case, the electronic device cannot be powered on. If the electronic device is powered on, the problems of a high short-circuit current and component burnout may arise.

S770: Prompt the user to plug in a charger to charge the electronic device.

After S770, if the user plugs in the charger to charge the electronic device, S780 may be performed in response to the user operation to charge a battery cell with a relatively low voltage.

S780: The system side compares the voltages of all the battery cells, and enables, based on a maximum voltage, the charging channels of all the other battery cells with voltages lower than the maximum voltage for charging.

It should be understood that to reduce voltage differences, voltage magnitudes among all the battery cells may be compared to determine a maximum voltage among the voltages of all the battery cells, and all remaining battery cells are charged based on the maximum voltage, so that the objective of reducing voltage differences may be achieved.

A voltage difference between the voltage of each battery cell and the maximum voltage may be first calculated. If the voltage difference is less than or equal to a voltage magnitude that needs to be supplemented by the power-on voltage difference threshold, a charge tube is enabled for charging based on the voltage magnitude that needs to be supplemented.

Optionally, it is possible to continuously return to perform S730 during charging after S780, and the system side determines a voltage difference between the first battery cell and each of the other battery cells in real time. If the voltage differences are still greater than the power-on voltage difference threshold, the steps from S760 and S780 are cyclically performed. Until the voltage differences are charged to be less than or equal to the power-on voltage difference threshold, the foregoing cycle is exited, and S740 and S750 are performed.

Optionally, in one embodiment, before S710, the method 700 may further include a procedure in which a voltage of the first battery cell does not satisfy the power-on voltage condition according to a first abnormal power-on solution.

In this embodiment of this application, in response to the power-on level being triggered, before power-on, a voltage of the first battery cell is detected. If the voltage satisfies the power-on voltage condition, the discharging channel of the first battery cell may be first enabled, and the discharging channels of the other battery cells remain disabled. Then, a voltage difference between the first battery cell and each of the other battery cells is detected, and when it is determined that any one of the voltage differences is greater than the power-on voltage difference threshold, to avoid the problems of a high short-circuit current and component burnout when the discharging channels are enabled at the same time due to a large voltage difference between two battery cells, it is set in this application that the electronic device is not allowed to be powered on first, instead, it is determined whether the power-on level is triggered by USB charging. When the power-on level is triggered by USB charging, it indicates that power may be supplied to the battery cells. Therefore, voltage magnitudes of the battery cells may be compared. The charging channel of a battery cell with a voltage lower than the maximum voltage among two battery cells is controlled to be enabled to charge the battery cell, so as to increase the voltage of the battery cell until the voltage difference between the two battery cells is reduced to satisfy a condition of being less than or equal to the power-on voltage difference threshold.

The foregoing is only an example of three battery cells connected in parallel. Certainly, an electronic device may further include more battery cells. A management method for the more battery cells is similar to that described above. Details are not described herein again.

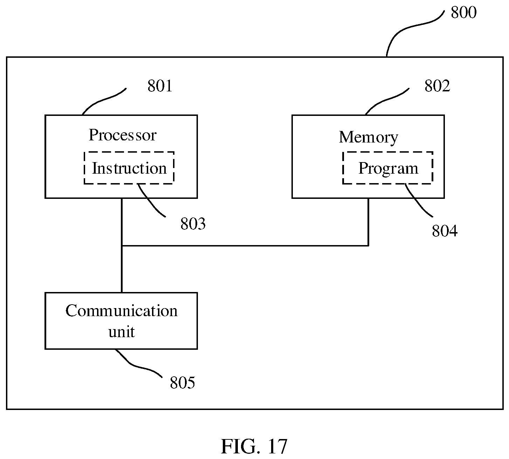

The foregoing describes the battery management methods provided in the embodiments of this application in detail with reference to FIG. 1 to FIG. 16, and a structure of an electronic device applicable to this application is described below with reference to FIG. 17.

FIG. 17 is a schematic diagram of a structure of an electronic device according to an embodiment of this application. A dotted line in FIG. 17 indicates that a unit or module is optional. The electronic device 800 may be configured to implement the battery management methods described in the foregoing method embodiments.

The electronic device 800 includes one or more processors 801, and the one or more processors 801 may support the electronic device 800 to implement the battery management methods in the method embodiments. The processor 801 may be a general-purpose processor or a dedicated processor. For example, the processor 801 may be a central processing unit (central processing unit, CPU), a digital signal processor (digital signal processor, DSP), an application specific integrated circuit (application specific integrated circuit, ASIC), a field programmable gate array (field programmable gate array, FPGA) or another programmable logic device, such as a discrete gate, a transistor logic device, or a discrete hardware component.

Optionally, the processor 801 may be configured to control the electronic device 800, execute a software program, and process data of the software program. The electronic device 800 may further include a communication unit 805 configured to implement input (receiving) and output (transmitting) of a signal.

For example, the electronic device 800 may be a chip, the communication unit 805 may be an input circuit and/or an output circuit of the chip, or the communication unit 805 may be a communication interface of the chip, and the chip may be used as a component of a terminal device or another electronic device.

For another example, the electronic device 800 may be a terminal device, and the communication unit 805 may be a transceiver of the terminal device, or the communication unit 805 may be a transceiver circuit of the terminal device.

The electronic device 800 may include one or more memories 802 on which a program 804 is stored, and the program 804 may be executed by the processor 801 to generate instructions 803, so that the processor 801 executes the battery management methods described in the above method embodiments according to the instructions 803.

Optionally, the memory 802 may further store data.

Optionally, the processor 801 may further read the data stored in the memory 802, where the data may be stored in a same storage address as the program 804, or the data may be stored in a different storage address from the program 804.

Optionally, the processor 801 and the memory 802 may be disposed separately, or may be integrated together, for example, integrated onto a system on chip (system on chip, SOC) of a terminal device.

For example, the memory 802 may be configured to store related programs 804 of the battery management methods provided in the embodiments of this application, and the processor 801 may invoke the related programs 804 of the battery management methods stored in the memory 802 to perform the battery management methods provided in the embodiments of this application. For example, a power-on level is received, with charging and discharging channels of a first battery cell and a second battery cell being disabled; a first battery management chip controls the first battery cell to discharge, and a second battery management chip controls the second battery cell not to discharge, in response to the power-on level; a second battery management chip controls the second battery cell to discharge when a voltage difference between the first battery cell and the second battery cell is less than or equal to a power-on voltage difference threshold; and the electronic device is controlled to power on when both the first battery cell and the second battery cell are discharged.

Optionally, this application further provides a computer program product. When the computer program product is executed by the processor 801, the battery management method in any method embodiment of this application is implemented.

For example, the computer program product may be stored in a memory 802, such as a program 804, and the program 804 is finally converted, by performing processing processes such as preprocessing, compiling, assembling, and linking, into an executable target file that can be executed by the processor 801.

Optionally, this application further provides a computer-readable storage medium that stores a computer program. When the computer program is executed by a computer, the battery management method in any method embodiment of this application is implemented. The computer program may be an advanced language program, or may be an executable target program.

For example, the computer-readable storage medium is, for example, the memory 802. The memory 802 may be a volatile memory or a non-volatile memory, or the memory 802 may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through example descriptions but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that the units and the algorithm steps in the examples described with reference to the embodiments disclosed in this specification can be implemented by using electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that such an implementation goes beyond the scope of this application.

It can be clearly understood by a person skilled in the art that for convenience and brevity of description, for specific working processes of the described system, apparatus, and unit, refer to the corresponding processes in the foregoing method embodiments. Details are not repeated herein.

In several embodiments provided in this application, it should be understood that the disclosed system, apparatus, and method may be implemented in another manner. For example, the embodiments of the electronic device described above are merely examples. For example, the module division is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate components may or may not be physically separated, and components displayed as units may or may not be physical units, in other words, may be located in one place, or may be distributed on a plurality of network units. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit.

It should be understood that in the embodiments of this application, sequence numbers of the processes do not mean an execution sequence. The execution sequence of the processes should be determined based on functions and internal logic of the processes, and should not be construed as any limitation on the implementation processes of the embodiments of this application.

In addition, the term "and/or" in this specification is merely an association relationship for describing associated objects, and indicates that three relationships may exist. For example, "A and/or B" may indicate the following three cases: Only A exists, both A and B exist, and only B exists. In addition, the character "/" in this specification usually represents an "or" relationship between associated objects.

When the function is implemented in a form of a software functional unit and sold or used as an independent product, the function may be stored in a computer-readable storage medium. Based on such an understanding, the technical solutions of this application essentially, or the portion contributing to the conventional technology, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. A battery management method, wherein the method is applied to an electronic device, the electronic device comprises a battery pack, the battery pack comprises a first battery branch and a second battery branch that are connected in parallel, the first battery branch comprises a first battery cell and a first battery management chip, and the second battery branch comprises a second battery cell and a second battery management chip; and the method comprises:
receiving a power-on level, with charging and discharging channels of the first battery cell and the second battery cell being disabled;
controlling, by the first battery management chip, the first battery cell to discharge, and controlling, by the second battery management chip, the second battery cell not to discharge, in response to the power-on level;
controlling, by the second battery management chip, the second battery cell to discharge when a voltage difference between the first battery cell and the second battery cell is less than or equal to a power-on voltage difference threshold; and
controlling the electronic device to power on when both the first battery cell and the second battery cell are discharged.

2. The method according to claim 1, wherein the method further comprises:
controlling, by the first battery management chip, the first battery cell to discharge, and controlling, by the second battery management chip, the second battery cell not to discharge when the voltage difference between the first battery cell and the second battery cell is greater than the power-on voltage difference threshold, and a voltage of the first battery cell is higher than a voltage of the second battery cell.

3. The method according to claim 1, wherein the method further comprises:
controlling, by the second battery management chip, the second battery cell to charge if the power-on level is triggered by USB charging when the voltage difference between the first battery cell and the second battery cell is greater than the power-on voltage difference threshold, and a voltage of the first battery cell is higher than a voltage of the second battery cell.

4. The method according to claim 1 or 3, wherein the method further comprises:
controlling, by the first battery management chip, the first battery cell to charge if the power-on level is triggered by USB charging when the voltage difference between the first battery cell and the second battery cell is greater than the power-on voltage difference threshold, and the voltage of the first battery cell is lower than the voltage of the second battery cell.

5. The method according to any one of claims 2 to 4, wherein the controlling, by the first battery management chip, the first battery cell to discharge, and controlling, by the second battery management chip, the second battery cell not to discharge, in response to the power-on level comprises:
detecting, by the first battery management chip, the voltage of the first battery cell; and
controlling, by the first battery management chip, the first battery cell to discharge, and controlling, by the second battery management chip, the second battery cell not to discharge, when it is determined that the voltage of the first battery cell satisfies a power-on voltage condition.

6. The method according to claim 5, wherein after the detecting, by the first battery management chip, the voltage of the first battery cell, the method further comprises:
controlling, by the first battery management chip, the first battery cell not to discharge when it is determined that the voltage of the first battery cell does not satisfy the power-on voltage condition; and
controlling, by the first battery management chip, the first battery cell to charge until the power-on voltage condition is satisfied if the power-on level is triggered by USB charging.

7. The method according to claim 5 or 6, wherein when it is determined that the voltage difference between the first battery cell and the second battery cell is greater than the power-on voltage difference threshold, and the voltage of the first battery cell satisfies the power-on voltage condition, the method further comprises:
detecting, by the second battery management chip, the voltage of the second battery cell; and
controlling, by the first battery management chip, the first battery cell to discharge, and controlling, by the second battery management chip, the second battery cell not to discharge, when it is determined that the voltage of the second battery cell satisfies the power-on voltage condition, and the voltage of the first battery cell is higher than the voltage of the second battery cell; or
controlling, by the second battery management chip, the second battery cell to charge if the power-on level is triggered by USB charging when it is determined that the voltage of the second battery cell satisfies the power-on voltage condition, and the voltage of the first battery cell is lower than the voltage of the second battery cell.

8. The method according to any one of claims 5 to 7, wherein when it is determined that the voltage difference between the first battery cell and the second battery cell is greater than the power-on voltage difference threshold, and the voltage of the first battery cell satisfies the power-on voltage condition, the method further comprises:
controlling, by the second battery management chip, the second battery cell to charge if the power-on level is triggered by USB charging when it is determined that the voltage of the second battery cell does not satisfy the power-on voltage condition.

9. The method according to claim 1, wherein the method further comprises:
controlling, by the first battery management chip, the first battery cell to switch from a discharge state to a non-discharge state, and controlling, by the second battery management chip, the second battery cell to switch from a non-discharge state to a discharge state when the voltage difference between the first battery cell and the second battery cell is greater than the power-on voltage difference threshold, and a voltage of the first battery cell is lower than a voltage of the second battery cell.

10. The method according to claim 1, wherein before the controlling, by the first battery management chip, the first battery cell to discharge, and controlling, by the second battery management chip, the second battery cell not to discharge, the method comprises:
detecting, by the first battery management chip, a voltage of the first battery cell;
detecting, by the second battery management chip, a voltage of the second battery cell; and
determining that the voltage of the first battery cell is higher than the voltage of the second battery cell.

11. The method according to any one of claims 1 to 10, wherein the first battery cell is a main battery of the electronic device, and the second battery cell is a secondary battery of the electronic device.

12. An electronic device, comprising a battery pack, wherein the battery pack comprises a first battery branch and a second battery branch that are connected in parallel, the first battery branch comprises a first battery cell and a first battery management chip, the second battery branch comprises a second battery cell and a second battery management chip, the electronic device comprises one or more processors, and the processor is configured to invoke computer instructions to enable the electronic device to perform the method according to any one of claims 1 to 11.

13. A chip system, wherein the chip system is applied to an electronic device, the chip system comprises one or more processors, and the processor is configured to invoke computer instructions to enable the electronic device to perform the method according to any one of claims 1 to 11.

14. A computer-readable storage medium, wherein the computer-readable storage medium stores a computer program, and when the computer program runs on an electronic device, the electronic device is enabled to perform the method according to any one of claims 1 to 11.
